# EUROPEAN PATENT APPLICATION

(11) **EP 4 606 675 A1**
(43) Date of publication of application: **27.08.2025**
(21) Application number: 22963781.4
(22) Date of filing: 31.10.2022
(51) Int. Cl.: B61J 1/00, H04W 84/18

(54) **DISPLAY CONTROL METHOD AND APPARATUS, AND SYSTEM AND VEHICLE**

(71) Applicant: Shenzhen Yinwang Intelligent Technologies Co., Ltd., Shenzhen, Guangdong 518129 (CN)
(72) Inventor: YIN, Tianyu, Shenzhen, Guangdong 518129 (CN); SONG, Xianxi, Shenzhen, Guangdong 518129 (CN); ZHANG, Runmeng, Shenzhen, Guangdong 518129 (CN); HU, Zhenchao, Shenzhen, Guangdong 518129 (CN); ZHOU, Jin, Shenzhen, Guangdong 518129 (CN)
(74) Representative: Gill Jennings & Every LLP
(86) International application number: PCT/CN2022/128776
(87) International publication number: WO 2024/092462

(57) **Abstract**

A vehicle, and a display control method, apparatus, and system are provided, and relate to the field of vehicle technologies, to provide a flexible vehicle-mounted display solution. The method includes: A vehicle-mounted controller sends display data to a target device (for example, a mobile phone), where the display data indicates the target device to display content displayed by a vehicle-mounted display apparatus (for example, a projection display apparatus) controlled by the vehicle-mounted controller; the vehicle-mounted controller obtains operation instruction information, where the operation instruction information indicates a user to perform an operation on content displayed on the target device; and the vehicle-mounted controller controls display of the vehicle-mounted apparatus based on the operation instruction information.

## Description

### TECHNICAL FIELD

This application relates to the field of intelligent vehicle technologies, and in particular, to a vehicle, and a display control method, apparatus, and system.

### BACKGROUND

As a main means of modern transportation, vehicles bring convenience to people's work and life, can provide quick and comfortable travel conditions, and are favored by people. In addition, the vehicles are developing more rapidly. On the one hand, a production volume is increasing, and the vehicle manufacturing industry has become an important industry in the world. On the other hand, due to improvement of science and technology, the vehicles are developing toward electronization and digitalization.

Currently, to improve vehicle use experience of a user, types of display apparatuses in the vehicles are increasingly diversified, but experience of the user on control flexibility is insufficient.

### SUMMARY

This application provides a vehicle, and a display control method, apparatus, and system, to provide a flexible vehicle-mounted display solution.

Transportation tools in this application may include road transportation, water transportation, air transportation, an industrial device, an agricultural device, an entertainment device, or the like. For example, the transportation tool may be a vehicle. The vehicle is a vehicle in a broad sense, and may be transportation (such as a commercial vehicle, a passenger vehicle, a motorcycle, a flight vehicle, or a train), an industrial vehicle (like a forklift, a trailer, or a tractor), an engineering vehicle (like an excavator, a bulldozer, or a crane), an agricultural device (like a lawn mower or a harvester), an entertainment device, or a toy vehicle. A type of the vehicle is not specifically limited in embodiments of this application. For another example, the transportation tool may be transportation such as an aircraft or a ship. In this application, the vehicle is used as an example for description.

According to a first aspect, a display control method is provided. The method includes: A vehicle-mounted controller sends display data to a target device (for example, a mobile phone), where the display data indicates the target device to display content displayed by a vehicle-mounted display apparatus controlled by the vehicle-mounted controller; the vehicle-mounted controller obtains operation instruction information, where the operation instruction information indicates an operation performed by a user on the content displayed on the target device; and the vehicle-mounted controller controls display of the vehicle-mounted display apparatus based on the operation instruction information.

The vehicle-mounted display apparatus may be a vehicle-mounted display, and may include one of screens such as a central display screen, an entertainment screen, and a rear-row screen, or may include a projector curtain. For example, the vehicle-mounted controller controls the central display screen to display first content, and sends display data to the target device. The display data indicates the target device to display the first content. The vehicle-mounted controller may obtain operation instruction information, to learn an operation performed by the user on the first content displayed on the target device, and control display of the vehicle-mounted display apparatus based on the operation instruction.

In the foregoing technical solution, when the vehicle-mounted controller controls the vehicle-mounted display apparatus to perform display, the vehicle-mounted controller may send the display data to the target device having an interaction function. When receiving the display data, the target device may display the content displayed by the vehicle-mounted display apparatus. In this case, the user may perform the operation on the content displayed on the target device. In this way, the target device may send the operation instruction information generated based on the operation to the vehicle-mounted controller, so that the vehicle-mounted controller controls display of the vehicle-mounted display apparatus based on the operation instruction information, to provide a flexible display solution and control solution for the vehicle-mounted display apparatus.

In a possible implementation of the first aspect, the vehicle-mounted display apparatus is a screen projection display apparatus, and the method specifically includes: The vehicle-mounted controller sends the display data to the target device (for example, a mobile phone), where the display data indicates the target device to display content displayed by the screen projection display apparatus controlled by the vehicle-mounted controller (the screen projection display apparatus may be a projection display apparatus, for example, a projection curtain, a projector, or the like, or a non-projection display apparatus, for example, a vehicle-mounted display). The displayed content may be some applications that are not related to vehicle control (to be specific, are not related to a driving function) and that are selected from applications installed on the vehicle-mounted controller or data of the applications. The vehicle-mounted controller obtains the operation instruction information, where the operation instruction information indicates the user to perform an operation on the content displayed on the target device. The vehicle-mounted controller controls the display of the vehicle-mounted display apparatus based on the operation instruction information.

In the foregoing technical solution, when the vehicle-mounted controller controls the vehicle-mounted display apparatus to perform display, the vehicle-mounted controller may send the display data to the target device having an interaction function. When receiving the display data, the target device may display the content displayed by the vehicle-mounted display apparatus. In this case, the user may perform the operation on the content displayed on the target device. In this way, the target device may send the operation instruction information generated based on the operation to the vehicle-mounted controller, so that the vehicle-mounted controller controls the display of the vehicle-mounted display apparatus based on the operation instruction information. Therefore, an interaction function of the vehicle-mounted display apparatus can be implemented through the target device. Further, when the vehicle-mounted display apparatus is a screen projection display apparatus, an interaction function of the screen projection display apparatus may be implemented through the target device, to improve flexibility of controlling vehicle-mounted projection. In addition, no additional remote control needs to be disposed for the vehicle-mounted projection apparatus, and security of the vehicle-mounted projection may be further improved.

In a possible implementation of the first aspect, the displayed content is an audio-visual video, for example, a movie, a TV series, a documentary, an entertainment video, or a short video, and the operation performed by the user is an operation for full-screen display. The method further includes: The vehicle-mounted controller sends first indication information to the target device, where the first indication information indicates the target device to enter a remote control mode, and the target device is configured to control, in the remote control mode, a playing status of the audio-visual video of the vehicle-mounted display apparatus. In the foregoing possible implementation, when the displayed content is the audio-visual video, and the operation performed by the user is the operation for full-screen display, the vehicle-mounted controller indicates, based on the first indication information, the target device to enter the remote control mode, so that the target device controls, in the remote control mode, a video playing status of the vehicle-mounted display apparatus. This implements control of the target device on the vehicle-mounted display apparatus. In addition, the target device does not need to continue to play the audio-visual video in the remote control mode. This can further reduce power consumption of the target device.

In a possible implementation of the first aspect, the method further includes: The vehicle-mounted controller receives exit signaling, where the exit signaling indicates exiting of the remote control mode. In the foregoing possible implementation, a manner in which the vehicle-mounted controller learns that the target device exits the remote control mode is provided.

In a possible implementation of the first aspect, the displayed content is a call video, and the method further includes: The vehicle-mounted controller sends second indication information to the target device. The second indication information indicates the target device to enter a shortcut button mode, and the target device is configured to control, in the shortcut button mode, a status of the call video of the vehicle-mounted display apparatus. Optionally, the method further includes: The vehicle-mounted controller receives exit signaling indicating the target device to exit the shortcut button mode. In the foregoing possible implementation, when the displayed content is the call video, the vehicle-mounted controller indicates, based on the second indication information, the target device to enter the shortcut button mode, so that the target device controls, in the shortcut button mode, a call video status of the vehicle-mounted display apparatus. This implements control of the target device on the vehicle-mounted display apparatus. In addition, the target device does not need to continue to play the call video in the shortcut button mode. This can further reduce power consumption of the target device.

In a possible implementation of the first aspect, the vehicle-mounted controller is in a wireless connection to the target device, for example, in a Wi-Fi connection, a Bluetooth connection, or an NFC connection; or the vehicle-mounted controller is in a wired connection to the target device, for example, the vehicle-mounted controller is connected to the target device through a charging cable of the target device. In the foregoing possible implementation, the vehicle-mounted controller may establish a connection to the target device in a plurality of different connection manners. This improves diversity and flexibility of establishing the connection between the target device and the vehicle-mounted controller.

In a possible implementation of the first aspect, the method further includes: The vehicle-mounted controller controls the vehicle-mounted display apparatus to display connection information, for example, projects, onto a projection screen, a two-dimensional code including the connection information, where the connection information is used by the target device to establish a connection to the vehicle-mounted controller. In the foregoing possible implementation, the vehicle-mounted controller may control the vehicle-mounted display apparatus to display the connection information. In this way, the target device may obtain the connection information by scanning display of the vehicle-mounted display apparatus. This improves reliability and security of establishing a connection between the target device and the vehicle-mounted controller.

In a possible implementation of the first aspect, the method further includes: The vehicle-mounted controller receives authorization information, where the authorization information includes information about the target device; and the vehicle-mounted controller determines, based on the authorization information, that the target device is an authorized device. In the foregoing possible implementation, when the target device is the authorized device, a server may send the authorization information to the target device, so that the vehicle-mounted controller determines, based on the authorization information, that the target device is the authorized device, and establishes a connection to the target device. This improves reliability and security of establishing the connection between the target device and the vehicle-mounted controller.

In a possible implementation of the first aspect, the vehicle-mounted controller and the target device are independent of each other. For example, the target device may be a mobile phone, a tablet computer, or the like. In the foregoing possible implementation, the user may provide, by using a terminal device portable to the user, an interaction manner for the vehicle-mounted display apparatus controlled by the vehicle-mounted controller. This improves user experience.

According to a second aspect, a display control method is provided. The method includes: A target device (for example, a mobile phone) receives display data from a vehicle-mounted controller, and displays, based on the display data, content displayed by a vehicle-mounted display apparatus (for example, a screen projection display apparatus) controlled by the vehicle-mounted controller, where the displayed content may be some applications that are not related to vehicle control (to be specific, are not related to a driving function) and that are selected from applications installed on the vehicle-mounted controller or data of the applications; the target device generates operation instruction information based on an operation performed by a user on the content displayed on the target device, where the operation instruction information indicates the operation performed by the user; and the target device sends the operation instruction information to the vehicle-mounted controller, where the operation instruction information is used by the vehicle-mounted controller to control display of the vehicle-mounted display apparatus.

In the foregoing technical solution, when the vehicle-mounted controller controls the vehicle-mounted display apparatus to perform display, the vehicle-mounted controller may send the display data to the target device having an interaction function. When receiving the display data, the target device may display the content displayed by the vehicle-mounted display apparatus. In this case, the user may perform the operation on the content displayed on the target device. In this way, the target device may send the operation instruction information generated based on the operation to the vehicle-mounted controller, so that the vehicle-mounted controller controls the display of the vehicle-mounted display apparatus based on the operation instruction information. Therefore, an interaction function of the vehicle-mounted display apparatus can be implemented through the target device. Further, when the vehicle-mounted display apparatus is a screen projection display apparatus, an interaction function of the screen projection display apparatus may be implemented through the target device, to improve flexibility of controlling vehicle-mounted projection. In addition, no additional remote control needs to be disposed for the vehicle-mounted projection apparatus, and security of the vehicle-mounted projection may be further improved.

In a possible implementation of the second aspect, the displayed content is an audio-visual video, for example, a movie, a TV series, a documentary, an entertainment video, or a short video, and the operation performed by the user is an operation for full-screen display. The method further includes: The target device receives first indication information from the vehicle-mounted controller, where the first indication information indicates the target device to enter a remote control mode; and the target device enters the remote control mode based on the first indication information, to control, in the remote control mode, a playing status of the audio-visual video of the vehicle-mounted display apparatus. In the foregoing possible implementation, when the displayed content is the audio-visual video, and the operation performed by the user is the operation for full-screen display, the vehicle-mounted controller indicates, based on the first indication information, the target device to enter the remote control mode, so that the target device controls, in the remote control mode, a video playing status of the vehicle-mounted display apparatus. This implements control of the target device on the vehicle-mounted display apparatus. In addition, the target device does not need to continue to play the audio-visual video in the remote control mode. This can further reduce power consumption of the target device.

In a possible implementation of the second aspect, the method further includes: When obtaining an exit instruction, the target device exits the remote control mode according to the exit instruction, and sends exit signaling to the vehicle-mounted controller. In the foregoing possible implementation, a manner in which the vehicle-mounted controller learns that the target device exits the remote control mode is provided.

In a possible implementation of the second aspect, the displayed content is a call video, and the method further includes: The target device receives second indication information from the vehicle-mounted controller, where the second indication information indicates the target device to enter a shortcut button mode; and the target device enters the shortcut button mode based on the second indication information, to control, in the shortcut button mode, a status of the call video of the vehicle-mounted display apparatus. Optionally, the method further includes: The vehicle-mounted controller receives exit signaling indicating the target device to exit the shortcut button mode. In the foregoing possible implementation, when the displayed content is the call video, the vehicle-mounted controller indicates, based on the second indication information, the target device to enter the shortcut button mode, so that the target device controls, in the shortcut button mode, a call video status of the vehicle-mounted display apparatus. This implements control of the target device on the vehicle-mounted display apparatus. In addition, the target device does not need to continue to play the call video in the shortcut button mode. This can further reduce power consumption of the target device.

In a possible implementation of the second aspect, the vehicle-mounted controller is in a wireless connection to the target device, for example, in a Wi-Fi connection, a Bluetooth connection, or an NFC connection; or the vehicle-mounted controller is in a wired connection to the target device, for example, the vehicle-mounted controller is connected to the target device through a charging cable of the target device. In the foregoing possible implementation, the vehicle-mounted controller may establish a connection to the target device in a plurality of different connection manners. This improves diversity and flexibility of establishing the connection between the target device and the vehicle-mounted controller.

In a possible implementation of the second aspect, the method further includes: The target device scans connection information displayed on the vehicle-mounted display apparatus, and establishes a connection to the vehicle-mounted controller based on the connection information. In the foregoing possible implementation, the vehicle-mounted controller may control the vehicle-mounted display apparatus to display the connection information. In this way, the target device may obtain the connection information by scanning display of the vehicle-mounted display apparatus. This improves reliability and security of establishing a connection between the target device and the vehicle-mounted controller.

In a possible implementation of the second aspect, the method further includes: The target device sends authentication information, where the authentication information includes information about the target device; and the target device receives an authorization indication, where the authorization indication indicates that the target device is an authorized device, the authorization indication includes the connection information, and the connection information is used to establish a connection to the vehicle-mounted controller. In the foregoing possible implementation, when the target device is the authorized device, the target device may directly establish a connection to the vehicle-mounted controller. This improves reliability and security of establishing the connection between the target device and the vehicle-mounted controller.

In a possible implementation of the second aspect, the vehicle-mounted display apparatus is a screen projection display apparatus. Optionally, the screen projection display apparatus is a projection display apparatus.

In a possible implementation of the second aspect, the vehicle-mounted controller and the target device are independent of each other. For example, the target device may be a mobile phone, a tablet computer, or the like. In the foregoing possible implementation, the user may provide, by using a terminal device portable to the user, an interaction manner for the vehicle-mounted display apparatus controlled by the vehicle-mounted controller. This improves user experience.

According to a third aspect, a display control system is provided. The display control system includes: a vehicle-mounted controller, a target device, and a vehicle-mounted display apparatus controlled by the vehicle-mounted controller. The vehicle-mounted controller is configured to send display data to the target device. The display data indicates the target device to display content displayed by the vehicle-mounted display apparatus. The target device is configured to receive the display data, display, based on the display data, the content displayed by the vehicle-mounted display apparatus, generate operation instruction information based on an operation performed by a user on the content displayed on the target device, and send the operation instruction information to the vehicle-mounted controller. The operation instruction information indicates the operation performed by the user. The vehicle-mounted controller is further configured to obtain the operation instruction information and control display of the vehicle-mounted display apparatus based on the operation instruction information.

In a possible implementation of the third aspect, the displayed content is an audio-visual video, and the operation performed by the user is an operation for full-screen display. The vehicle-mounted controller is further configured to send first indication information to the target device, where the first indication information indicates the target device to enter a remote control mode; and the target device is further configured to receive the first indication information and enter the remote control mode, to control, in the remote control mode, a playing status of the audio-visual video of the vehicle-mounted display apparatus.

In a possible implementation of the third aspect, the target device is further configured to: when obtaining an exit instruction, exit the remote control mode according to the exit instruction, and send exit signaling to the vehicle-mounted controller; and the vehicle-mounted controller is further configured to receive the exit signaling, where the exit signaling indicates exiting of the remote control mode.

In a possible implementation of the third aspect, the displayed content is a call video; the vehicle-mounted controller is further configured to send second indication information to the target device, where the second indication information indicates the target device to enter a shortcut button mode; and the target device is further configured to receive the second indication information, and enter the shortcut button mode, to control, in the shortcut button mode, a status of the call video of the vehicle-mounted display apparatus.

In a possible implementation of the third aspect, the vehicle-mounted controller is further configured to control the vehicle-mounted display apparatus to display connection information, where the connection information is used by the target device to establish a connection to the vehicle-mounted controller; and the target device is further configured to scan the connection information displayed on the vehicle-mounted display apparatus, and establish a connection to the vehicle-mounted controller based on the connection information.

In a possible implementation of the third aspect, the target device is further configured to send authentication information, where the authentication information includes information about the target device; the target device is further configured to receive an authorization indication, where the authorization indication indicates that the target device is an authorized device, the authorization indication includes the connection information, and the connection information is used to establish a connection to the vehicle-mounted controller; and the vehicle-mounted controller is further configured to receive authorization information, and determine, based on the authorization information, that the target device is an authorized device, where the authorization information includes the information about the target device.

In a possible implementation of the third aspect, the vehicle-mounted display apparatus is a screen projection display apparatus. Optionally, the screen projection display apparatus is a projection display apparatus.

In a possible implementation of the third aspect, the vehicle-mounted controller and the target device are independent of each other.

According to a fourth aspect, a vehicle-mounted control apparatus is provided. The vehicle-mounted control apparatus includes: a sending unit, configured to send display data to a target device, where the display data indicates the target device to display content displayed by a vehicle-mounted display apparatus controlled by the vehicle-mounted control apparatus; a receiving unit, configured to obtain operation instruction information, where the operation instruction information indicates an operation performed by a user on the content displayed on the target device; and a control unit, configured to control display of the vehicle-mounted display apparatus based on the operation instruction information.

In a possible implementation of the fourth aspect, the displayed content is an audio-visual video, and the operation performed by the user is an operation for full-screen display. The sending unit is further configured to send first indication information to the target device, where the first indication information indicates the target device to enter a remote control mode, and the target device is configured to control, in the remote control mode, a playing status of the audio-visual video of the vehicle-mounted display apparatus.

In a possible implementation of the fourth aspect, the receiving unit is further configured to receive exit signaling, where the exit signaling indicates exiting of the remote control mode.

In a possible implementation of the fourth aspect, the displayed content is a call video; and the sending unit is further configured to send second indication information to the target device, where the second indication information indicates the target device to enter a shortcut button mode, and the target device is configured to control, in the shortcut button mode, a status of the call video of the vehicle-mounted display apparatus.

In a possible implementation of the fourth aspect, the control unit is further configured to control the vehicle-mounted display apparatus to display connection information, where the connection information is used by the target device to establish a connection to the vehicle-mounted control apparatus.

In a possible implementation of the fourth aspect, the receiving unit is further configured to receive authorization information, where the authorization information includes information about the target device; and the control unit is further configured to determine, based on the authorization information, that the target device is an authorized device.

In a possible implementation of the fourth aspect, the vehicle-mounted display apparatus is a screen projection display apparatus.

In a possible implementation of the fourth aspect, the vehicle-mounted control apparatus and the target device are independent of each other.

According to a fifth aspect, a display control apparatus is provided. The display control apparatus includes: a receiving unit, configured to receive display data from a vehicle-mounted controller, and display, based on the display data, content displayed by a vehicle-mounted display apparatus controlled by the vehicle-mounted controller; a processing unit, configured to generate operation instruction information based on an operation performed by a user on the content displayed on the display control apparatus, where the operation instruction information indicates the operation performed by the user; and a sending unit, configured to send the operation instruction information to the vehicle-mounted controller, where the operation instruction information is used by the vehicle-mounted controller to control display of the vehicle-mounted display apparatus.

In a possible implementation of the fifth aspect, the displayed content is an audio-visual video, and the operation performed by the user is an operation for full-screen display. The receiving unit is further configured to receive first indication information from the vehicle-mounted controller, where the first indication information indicates the display control apparatus to enter a remote control mode; and the processing unit is further configured to enter the remote control mode based on the first indication information, to control, in the remote control mode, a playing status of the audio-visual video of the vehicle-mounted display apparatus.

In a possible implementation of the fifth aspect, the method further includes: the processing unit, further configured to obtain an exit instruction, and exit the remote control mode according to the exit instruction; and the sending unit, further configured to send exit signaling to the vehicle-mounted controller.

In a possible implementation of the fifth aspect, the displayed content is a call video, and the display control apparatus further includes a control unit. The receiving unit is further configured to receive second indication information from the vehicle-mounted controller, where the second indication information indicates the display control apparatus to enter a shortcut button mode; and the control unit is further configured to enter the shortcut button mode based on the second indication information, to control, in the shortcut button mode, a status of the call video of the vehicle-mounted display apparatus.

In a possible implementation of the fifth aspect, the processing unit is further configured to control scanning of connection information displayed on the vehicle-mounted display apparatus, and establish a connection to the vehicle-mounted controller based on the connection information.

In a possible implementation of the fifth aspect, the sending unit is further configured to send authentication information, where the authentication information includes information about the display control apparatus; and the receiving unit is further configured to receive an authorization indication, where the authorization indication indicates that the display control apparatus is an authorized device, the authorization indication includes the connection information, and the connection information is used to establish a connection to the vehicle-mounted controller.

In a possible implementation of the fifth aspect, the vehicle-mounted display apparatus is a screen projection display apparatus.

In a possible implementation of the fifth aspect, the vehicle-mounted controller and the display control apparatus are independent of each other.

According to another aspect of this application, a vehicle-mounted control apparatus is provided. The apparatus includes a processor and a memory, the memory stores instructions. When the instructions are run on the processor, the vehicle-mounted control apparatus is enabled to perform the display control method according to any one of the first aspect or the possible implementations of the first aspect.

According to another aspect of this application, a display control apparatus is provided. The apparatus includes a processor and a memory. The memory stores instructions. When the instructions are run on the processor, a vehicle-mounted control apparatus is enabled to perform the display control method according to any one of the second aspect or the possible implementations of the second aspect.

According to another aspect of this application, a chip system is provided. The chip system includes at least one processor and at least one interface circuit. The at least one interface circuit is configured to perform a receiving and sending function, and send instructions to the at least one processor. When the at least one processor executes the instructions, the at least one processor performs the display control method according to any one of the foregoing aspects or the possible implementations.

According to another aspect of this application, a display control system is provided. The system includes a vehicle-mounted controller and a vehicle-mounted display apparatus. The vehicle-mounted controller is configured to control display of the vehicle-mounted display apparatus. The vehicle-mounted controller includes the vehicle-mounted control apparatus according to any one of the foregoing aspects or possible implementations.

According to another aspect of this application, a vehicle is provided. The vehicle includes the foregoing display control system.

According to another aspect of this application, a computer-readable storage medium is provided. The computer-readable storage medium stores a computer program or instructions. When the computer program or the instructions are run, the display control method according to any one of the first aspect or the possible implementations of the first aspect is implemented.

According to another aspect of this application, a computer-readable storage medium is provided. The computer-readable storage medium stores a computer program or instructions. When the computer program or the instructions are run, the display control method according to any one of the second aspect or the possible implementations of the second aspect is implemented.

It may be understood that, for beneficial effects that can be achieved by any one of the vehicle-mounted control apparatus, the display control apparatus, the vehicle-mounted terminal, the chip system, the vehicle, the computer-readable storage medium, and the computer program product provided above, refer to the beneficial effects in the display control method provided above. To be specific, when the vehicle-mounted controller controls the vehicle-mounted display apparatus to perform display, the vehicle-mounted controller may send the display data to the target device having an interaction function. When receiving the display data, the target device may display the content displayed by the vehicle-mounted display apparatus. In this case, the user may perform the operation on the content displayed on the target device. In this way, the target device may send the operation instruction information generated based on the operation to the vehicle-mounted controller, so that the vehicle-mounted controller controls the display of the vehicle-mounted display apparatus based on the operation instruction information. Therefore, an interaction function of the vehicle-mounted display apparatus can be implemented through the target device. Further, when the vehicle-mounted display apparatus is a screen projection display apparatus, an interaction function of the screen projection display apparatus may be implemented through the target device, to improve flexibility of controlling vehicle-mounted projection. In addition, no additional remote control needs to be disposed for the vehicle-mounted projection apparatus, and security of the vehicle-mounted projection may be further improved.

### BRIEF DESCRIPTION OF DRAWINGS

FIG. 1 is a diagram of a structure of a terminal device according to an embodiment of this application;
FIG. 2A and FIG. 2B are diagrams of a vehicle-mounted display apparatus according to an embodiment of this application;
FIG. 3 is a diagram of a software architecture of a terminal device according to an embodiment of this application;
FIG. 4 is a schematic flowchart of a display control method according to an embodiment of this application;
FIG. 5 is a diagram of a display control interface according to an embodiment of this application;
FIG. 6 is a diagram of another display control interface according to an embodiment of this application;
FIG. 7 is a diagram of another display control interface according to an embodiment of this application;
FIG. 8 is a schematic flowchart of another display control method according to an embodiment of this application;
FIG. 9 is a diagram of an interface of entering a remote control mode according to an embodiment of this application;
FIG. 10 is a schematic flowchart of another display control method according to an embodiment of this application;
FIG. 11 is a diagram of an interface of entering a shortcut mode according to an embodiment of this application;
FIG. 12 is a diagram of a connection establishment interface according to an embodiment of this application;
FIG. 13 is a diagram of another connection establishment interface according to an embodiment of this application;
FIG. 14 is a diagram of another connection establishment interface according to an embodiment of this application;
FIG. 15 is a schematic flowchart of another display control method according to an embodiment of this application;
FIG. 16 is a diagram of another display control interface according to an embodiment of this application;
FIG. 17 is a diagram of a structure of a vehicle-mounted control apparatus according to an embodiment of this application;
FIG. 18 is a diagram of a structure of another vehicle-mounted control apparatus according to an embodiment of this application;
FIG. 19 is a diagram of a structure of a display control apparatus according to an embodiment of this application; and
FIG. 20 is a diagram of a structure of another apparatus according to an embodiment of this application.

### DESCRIPTION OF EMBODIMENTS

The following describes technical solutions in embodiments of this application with reference to the accompanying drawings in embodiments of this application. In this application, "at least one" refers to one or more, "a plurality of" refers to two or more, and "and/or" describes an association relationship between associated objects, and indicates that three relationships may exist. The term "and/or" describes an association relationship between associated objects, and represents that three relationships may exist. For example, A and/or B may represent the following cases: A exists alone, both A and B exist, and B exists alone, where A and B may be singular or plural. A character "/" generally indicates an "or" relationship between the associated objects. At least one of the following items (pieces) or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural. In addition, in the embodiments of this application, terms such as "first" and "second" do not limit a quantity or an execution sequence.

It should be noted that in this application, the term such as "example" or "for example" represents giving an example, an illustration, or a description. Any embodiment or design scheme described as an "example" or "for example" in this application should not be explained as being more preferred or having more advantages than another embodiment or design scheme. Specifically, use of a word like "example" or "for example" is intended to present a related concept in a specific manner.

As a main means of modern transportation, vehicles bring convenience to people's work and life, can provide quick and comfortable travel conditions, and are favored by people. In addition, the vehicles are developing more rapidly. On the one hand, a production volume is increasing, and the vehicle manufacturing industry has become an important industry in the world. On the other hand, due to improvement of science and technology, the vehicles are developing toward electronization and digitalization.

Currently, to improve vehicle use experience of a user, most vehicles are provided with a projection display apparatus. For example, the projection display apparatus may include a projector and a projection screen. The projector may receive projection data transmitted by a vehicle-mounted controller, and project the projection data onto the projection screen for display, to provide high-quality visual effects such as a large picture, high resolution, and high definition for a user in a vehicle.

Based on this, an embodiment of this application provides a display control method. The method is applied to a case: When a vehicle-mounted controller controls display of a vehicle-mounted display apparatus, the vehicle-mounted controller sends display data to a target device that can implement interaction, and the target device displays, based on the display data, content displayed by the vehicle-mounted display apparatus. In this case, the vehicle-mounted controller may obtain operation instruction information generated by the user performing an operation on the content displayed on the target device, and control the display of the vehicle-mounted display apparatus based on the operation instruction information. In this way, when the vehicle-mounted display apparatus is a screen projection display apparatus (for example, a projection display apparatus), and the target device is a mobile phone or a tablet computer, the mobile phone or the tablet computer may display content displayed by the screen projection display apparatus. The user may control display of the screen projection display apparatus by performing an operation on the content displayed on the mobile phone or the tablet computer. This implements interaction with the screen projection display apparatus.

Before technical solutions of this application are described below, a terminal device to which the foregoing display control method is applied in embodiments of this application is first described.

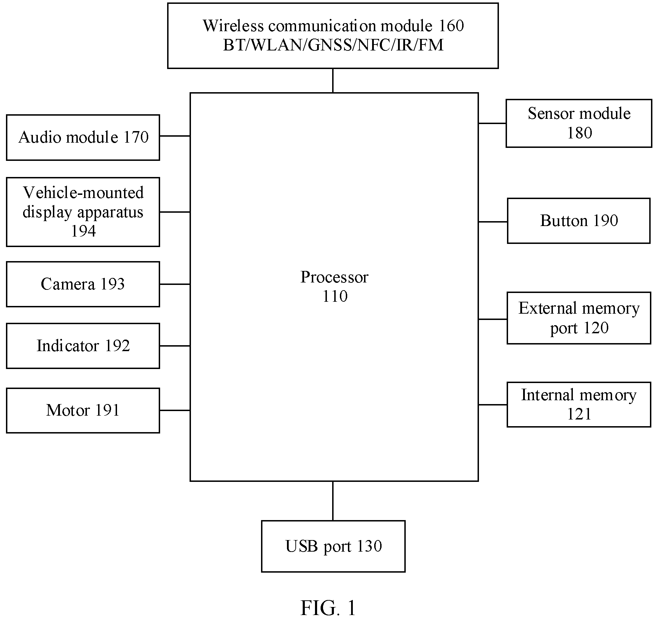

FIG. 1 is a diagram of a structure of a terminal device 100 according to an embodiment of this application. The terminal device 100 may be a vehicle, an automobile, a vehicle-mounted terminal, another terminal configured to control a vehicle, or the like. As shown in FIG. 1, the terminal device 100 may include a processor 110, an external memory port 120, an internal memory 121, a universal serial bus (universal serial bus, USB) port 130, a wireless communication module 160, an audio module 170, a sensor module 180, a button 190, a motor 191, an indicator 192, a camera 193, a vehicle-mounted display apparatus 194, and the like.

It may be understood that the structure in this embodiment of this application does not constitute a specific limitation on the terminal device 100. In some other embodiments of this application, the terminal device 100 may include more or fewer components than those shown in the figure, or a combination of a part of the components, or splits from a part of the components, or an arrangement of different components. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate components, or may be integrated into one or more processors.

The controller may generate an operation control signal based on instruction operation code and a timing signal, and complete control of instruction fetching and instruction execution. Optionally, the controller is a vehicle-mounted controller. In a possible example, the controller is a cockpit domain controller (cockpit domain controller, CDC).

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. In this way, repeated access is avoided, and waiting time of the processor 110 is reduced. This improves system efficiency.

In some embodiments, the processor 110 may include one or more ports. The ports may include an inter-integrated circuit (inter-integrated circuit, I2C) port, an inter-integrated circuit sound (inter-integrated circuit sound, I2S) port, a pulse code modulation (pulse code modulation, PCM) port, a universal asynchronous receiver/transmitter (universal asynchronous receiver/transmitter, UART) port, a mobile industry processor interface (mobile industry processor interface, MIPI), a general-purpose input/output (general-purpose input/output, GPIO) port, a subscriber identity module (subscriber identity module, SIM) port, a universal serial bus (universal serial bus, USB) port, and/or the like.

The MIPI interface may be configured to connect the processor 110 to peripheral devices such as the vehicle-mounted display apparatus 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the terminal device 100. The processor 110 communicates with the vehicle-mounted display apparatus 194 through the DSI interface, to implement a display function of the terminal device 100.

The USB port 130 is a port that conforms to a USB standard specification, and may be specifically a mini USB port, a micro USB port, a USB Type-C port, or the like. The USB port 130 may be configured to connect to a charger to charge the terminal device 100, or may be configured to transmit data between the terminal device 100 and a peripheral device, or may be configured to connect to a headset, to play audio through the headset. This port may further be configured to connect to another terminal device, for example, an augmented reality (augmented reality, AR) device.

It can be understood that a port connection relationship between the modules shown in this embodiment of this application is merely an example for description, and constitutes no limitation on the structure of the terminal device 100. In some other embodiments of this application, different port connection manners in the foregoing embodiments or a combination of a plurality of port connection manners may alternatively be used for the terminal device 100.

A wireless communication function of the terminal device 100 may be implemented by using an antenna, the wireless communication module 160, the modem processor, the baseband processor, and the like.

The antenna is configured to transmit and receive electromagnetic wave signals. Each antenna in the terminal device 100 may be configured to cover one or more communication frequency bands. Different antennas may further be multiplexed, to improve antenna utilization. For example, the antenna may be multiplexed as a diversity antenna in a wireless local area network. In some other embodiments, the antenna may be used in combination with a tuning switch.

The wireless communication module 160 may provide a solution that is applied to the terminal device 100 and that includes wireless communication like a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication technology (near field communication, NFC), and an infrared (infrared, IR) technology. The wireless communication module 160 may be one or more devices that integrate at least one communication processing module. The wireless communication module 160 receives an electromagnetic wave through the antenna, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna for radiation.

In some embodiments, the terminal device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device 100 implements a display function by using the GPU, the vehicle-mounted display apparatus 194, the application processor, and the like. The GPU is a microprocessor for image processing, and is connected to the vehicle-mounted display apparatus 194 and the application processor. The GPU is configured to perform mathematical and geometric calculation for graphics rendering. The processor 110 may include one or more GPUs that execute program instructions to generate or change display information.

The vehicle-mounted display apparatus 194 is configured to display an image, a video, and the like. The vehicle-mounted display apparatus 194 includes a display panel. The display panel may be a liquid crystal display (liquid crystal display, LCD), for example, an organic light-emitting diode (organic light-emitting diode, OLED), an active-matrix organic light-emitting diode (active-matrix organic light-emitting diode, AMOLED), a flex light-emitting diode (flex light-emitting diode, FLED), a mini light-emitting diode (mini light-emitting diode, Mini-LED), a micro light-emitting diode (micro-LED), a micro organic light-emitting diode (micro-OLED), and a quantum dot light-emitting diode (quantum dot light-emitting diode, QLED) are used for production. Optionally, the terminal device 100 may include one or more vehicle-mounted display apparatuses 194.

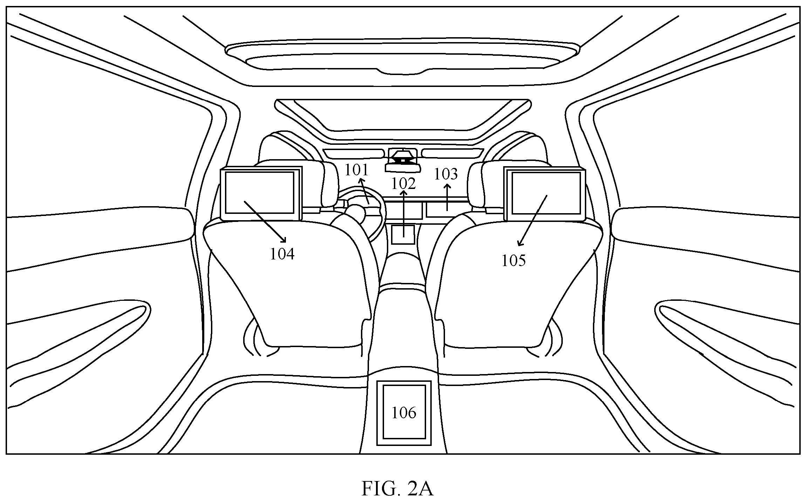

In some embodiments, the vehicle-mounted display apparatus 194 includes a display having an interaction function. The display may be a physical display, and is an important component of an in-vehicle infotainment system. For example, as shown in FIG. 2A, a plurality of displays are disposed in a vehicle cockpit. For example, a digital instrument display 101, a central display screen 102, a display 103 in front of a front passenger seat, a display 104 in front of a left rear seat, a display 105 in front of a right rear seat, an armrest screen 106 (for example, a display at an armrest of two rear seats), and even a vehicle window may also be used as displays for display.

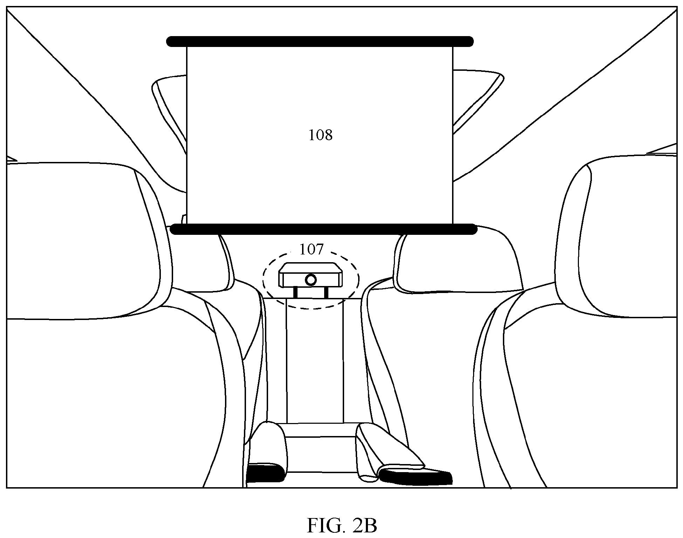

In some other embodiments, as shown in FIG. 2B, the vehicle-mounted display apparatus 194 may further include a screen projection display apparatus having no interaction function. For example, the screen projection display apparatus is a projection display apparatus and may include a projector 107 and a projection screen 108. The projector 107 may project display content onto the projection screen 108 for display. In an example, the projector 107 may be disposed in the middle of a rear seat, and the projection screen 108 may be disposed above the rear of a driver position and a front passenger position. Optionally, the projection screen 108 may be a projector curtain. When a user uses the projector curtain, the projector curtain may be unfolded. When the user does not use the projector curtain, the projector curtain may be folded or retracted. For example, the vehicle-mounted controller may control unfolding and retraction of the projector curtain by using a vehicle intranet unit (vehicle intranet unit, VIU). Because the projection screen 108 usually has a large size, displaying by using the projection screen 108 may provide a user in a vehicle with high-quality visual effects such as a large picture, high resolution, and high definition.

The camera 193 is configured to capture a static image or a video. An object generates, through a lens, an optical image to be projected onto a photosensitive element. The photosensitive element may be a charge coupled device (charge coupled device, CCD) or a complementary metal-oxide-semiconductor (complementary metal-oxide-semiconductor, CMOS) optoelectronic transistor. The photosensitive element converts an optical signal into an electrical signal, and then transmits the electrical signal to an ISP for converting the electrical signal into a digital image signal. The ISP outputs the digital image signal to a DSP for processing. The DSP converts the digital image signal into an image signal in a standard format like red green blue (red green blue, RGB) or luminance chrominance (luminance chrominance, YUV). Optionally, the terminal device 100 may include one or more cameras 193.

The external memory port 120 may be configured to connect to an external storage card, for example, a micro SD card, to improve a storage capability of the terminal device 100. The external storage card communicates with the processor 110 through the external memory port 120, to implement a data storage function. For example, files such as music and video are stored in the external storage card.

The internal memory 121 may be configured to store computer-executable program code, where the executable program code includes instructions. The internal memory 121 may include a program storage area and a data storage area. The program storage area may store an operating system, an application required by at least one function (for example, a sound playing function and an image playing function), and the like. The data storage area may store data (for example, audio data or an address book) created in a process of using the terminal device 100, and the like. In addition, the internal memory 121 may include a high speed random access memory, and may further include a nonvolatile memory, for example, at least one magnetic disk storage device, a flash storage device, or a universal flash storage (universal flash storage, UFS). The processor 110 executes various function applications of the terminal device 100 and data processing by running the instructions stored in the internal memory 121 and/or the instructions stored in the memory disposed in the processor 110.

The audio module 170 is configured to convert a digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The terminal device 100 may use the audio module 170, for example, music playing or recording. The audio module 170 may include a speaker, a receiver, a microphone, a headset jack, an application processor, and the like, to implement an audio function.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The touch sensor is also referred to as a "touch component". The touch sensor may be disposed on a display of the vehicle-mounted display apparatus 194. The touch sensor and the display form a touchscreen, also referred to as a "touch control screen". The touch sensor is configured to detect a touch operation performed on or near the touch sensor. The touch sensor may transfer a detected touch operation to the application processor, to determine a touch event type. Visual output related to the touch operation may be provided by using the display. In some other embodiments, the touch sensor may be also disposed on a surface of the terminal device 100 at a position different from a position of the display.

The button 190 includes a wheel control button, a power button, a volume button, and the like. The button 190 may be a mechanical button, or may be a touch button. The terminal device 100 may receive a button input, and generate a button signal input related to a user setting and function control of the terminal device 100.

The motor 191 may be configured to provide a touch vibration feedback. For example, for touch operations performed on different applications, the motor 191 may correspond to different vibration feedback effects. The motor 191 may also correspond to different vibration feedback effects for touch operations performed on different areas of a display in the vehicle-mounted display apparatus 194. A touch vibration feedback effect may further be customized.

The indicator 192 may be an indicator light, may indicate a change in power, and may also indicate a message, a turn signal, a seat belt warning light, and the like.

After the hardware architecture of the terminal device 100 is described, the following describes a software system of the terminal device 100. The software system of the terminal device 100 may use a layered architecture, an event-driven architecture, a microkernel architecture, a microservice architecture, a cloud architecture, or the like. In this embodiment of this application, the layered architecture is used as an example to describe a software architecture of the terminal device 100.

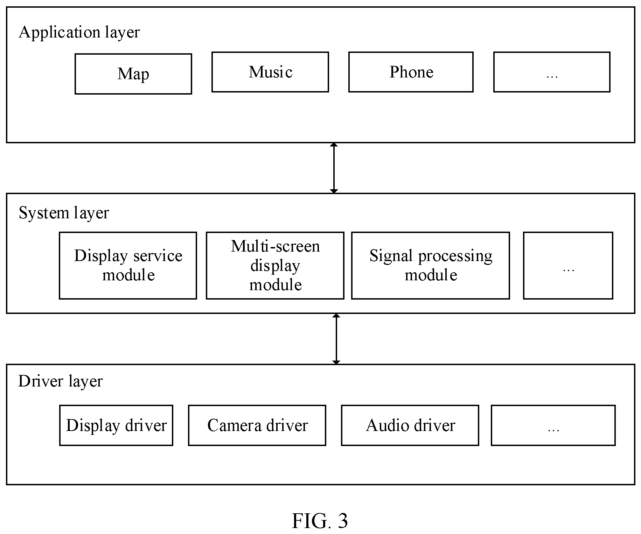

FIG. 3 is a diagram of a software architecture of a terminal device 100 according to an embodiment of this application. The layered architecture divides software into several layers. Each layer has a clear role and responsibility. Layers communicate with each other through software ports. In an example, as shown in FIG. 3, the layered architecture includes three layers: an application layer, a system layer, and a driver layer respectively from top to bottom.

The application layer may include a series of application packages. As shown in FIG. 3, the application packages may include applications such as Map, Music, and Phone. The application layer runs on a virtual machine. The virtual machine executes a java file at the application layer into a binary file. The virtual machine is configured to implement functions such as object lifecycle management, stack management, thread management, security and exception management, and garbage collection.

The system layer is responsible for system scheduling and management, provides an application programming interface (application programming interface, API), can communicate with an application at the application layer through the API, and can schedule a driver at the driver layer through the API. In an example, the system layer may include a display service module, a multi-screen display module, a signal processing module, and the like. The display service module may be configured to display an application interface on a display. The multi-screen display module may be configured to control multi-screen display of the terminal device 100. For example, the multi-screen display module provides a multi-screen display capability, and is configured to negotiate display content of a plurality of displays. Optionally, after an application is started, the application may also be simultaneously displayed on one or more displays, and display content layouts on different displays may be the same or different. The signal processing module may be configured to implement signal transmission between modules in the terminal device 100. For example, the signal may include but is not limited to a controller area network (controller area network, CAN) signal.

The driver layer is a layer between hardware and software. The driver layer may include one or more drivers related to the terminal device 100. In an example, the driver layer may include a display driver, a camera driver, an audio driver, a Bluetooth driver, a Wi-Fi driver, and the like.

After the software architecture of the terminal device 100 is described, the following describes in detail specific content of the display control method provided in this application.

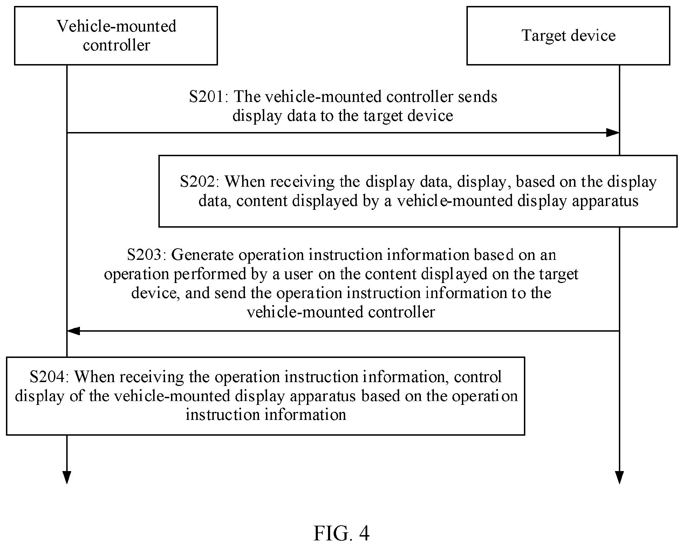

FIG. 4 is a schematic flowchart of a display control method according to an embodiment of this application. The method may be applied to a display control system. The display control system includes a vehicle-mounted controller, a target device, and a vehicle-mounted display apparatus controlled by the vehicle-mounted controller. The method includes the following steps.

S201: The vehicle-mounted controller sends display data to the target device, where the display data indicates the target device to display content displayed by the vehicle-mounted display apparatus controlled by the vehicle-mounted controller.

The vehicle-mounted controller may be a cockpit domain controller CDC, or another vehicle-mounted controller like a processor in an in-vehicle infotainment. The vehicle-mounted display apparatus may be a display having an interaction function, or may be a screen projection display apparatus having no interaction function. The screen projection display apparatus may include one or more of a projector, a projection screen, a head-up display apparatus, and the like. The vehicle-mounted controller and the target device may be disposed independently of each other. For example, the target device may be a mobile terminal like a mobile phone or a tablet computer that has interaction and display functions.

In addition, the content displayed by the vehicle-mounted display apparatus may be some applications that are not related to vehicle control (to be specific, are not related to a driving function) and that are selected from applications installed on the vehicle-mounted controller or display of the applications. Optionally, the displayed content may be entertainment and communication software, or may be one or a combination of text information, image information, video information, or the like related to entertainment and communication software. The entertainment and communication software may be software controlled by the vehicle-mounted controller to run. The text information may be news, a novel, or the like, and the video information may be an audio-visual video, a call video, or the like.

In addition, the display data may include the content displayed by the vehicle-mounted display apparatus. Optionally, the display data may further include another display parameter used by the target device to display the content. For example, the another display parameter may include one or more parameters of a display ratio, resolution, a frame rate, and the like.

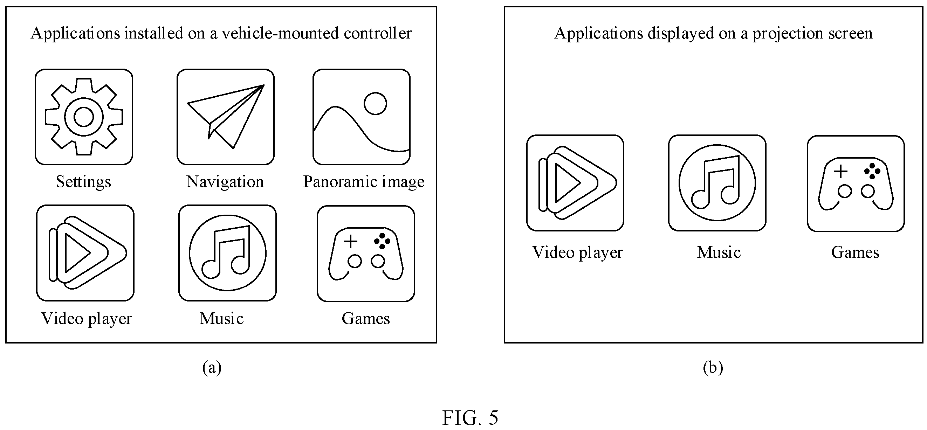

In a possible embodiment, as shown in (a) in FIG. 5, it is assumed that the vehicle-mounted display apparatus is a projection display apparatus and includes a projector and a projection screen, and applications installed on the vehicle-mounted controller include: Settings, Navigation, Panoramic image, Music, Video player, and Games. As shown in (b) in FIG. 5, when controlling the projection display apparatus to perform display, the vehicle-mounted controller may start the projection display apparatus to display the applications including Music, Video player, and Games on the projection screen through the projector. Settings, Navigation, and Panoramic image are applications related to vehicle control, and Music, Video player, and Games are applications irrelevant to vehicle control. Therefore, the vehicle-mounted controller may project one or more applications such as Music, Video player, and Games onto the projection display apparatus.

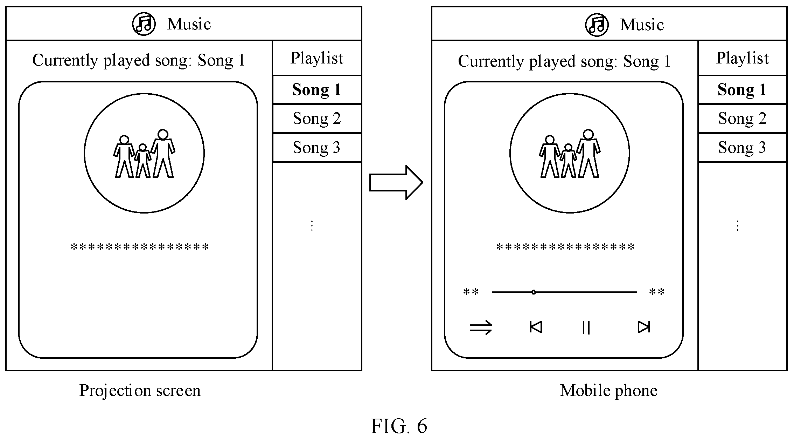

In another possible embodiment, as shown in FIG. 6, it is assumed that the vehicle-mounted display apparatus is a projection display apparatus and includes a projector and a projection screen, and the target device is a mobile phone. When the vehicle-mounted controller controls the vehicle-mounted display apparatus to display a music application, the vehicle-mounted controller may transmit displayed content (for example, a playing interface of a song 1) to the projector, so that the projector projects the content onto the projection screen. In addition, the vehicle-mounted controller may further send display data (for example, audio and video data related to the song 1) to the mobile phone, to indicate, based on the display data, the target device to display the content (for example, the playing interface of the song 1) displayed by the vehicle-mounted display apparatus. In FIG. 6, an example in which the displayed content is a song in the music application, a playlist includes the song 1, a song 2, and a song 3, and the song 1 is a currently played song is used for description.

S202: When the target device receives the display data, the target device displays, based on the display data, the content displayed by the vehicle-mounted display apparatus.

The target device may be a device having an interaction function. For example, the target device includes a touchscreen having an interaction function. When the target device receives the display data, the target device may display, on the touchscreen based on the display data, the content displayed by the vehicle-mounted display apparatus, and display, on the touchscreen, a related component configured to implement the interaction function.

In addition, the target device may have a reverse projection function. The reverse projection function may specifically mean that the target device can display content displayed by another display device. For example, the target device may receive display data from the vehicle-mounted controller, and display, based on the display data, content displayed by the vehicle-mounted display apparatus.

In a possible embodiment, as shown in FIG. 6, the target device is a mobile phone, and the mobile phone includes a touchscreen. When the mobile phone receives display data from the vehicle-mounted controller, the mobile phone may display, on the touchscreen of the mobile phone based on the display data, content displayed by the vehicle-mounted display apparatus, and display related controls used for interaction, such as a fast-forward control, a previous control, a pause control, and a next control.

S203: The target device generates operation instruction information based on an operation performed by a user on the content displayed on the target device, and sends the operation instruction information to the vehicle-mounted controller, where the operation instruction information indicates the operation performed by the user.

When the user needs to interact with the vehicle-mounted display apparatus, the user may perform an operation on the content displayed on the target device. The operation may be a touch operation performed on a touchscreen of the target device, or may be an operation triggered by using a physical button of the target device, or may be an operation triggered through voice control. This is not specifically limited in embodiments of this application.

In addition, when the user performs an operation on the content displayed on the target device, the target device may generate operation instruction information corresponding to the operation. For example, when the operation is a touch operation, the operation instruction information may be a touch event; when the operation is an operation triggered by using a physical button, the operation instruction information may be a button event; or when the operation is an operation triggered through voice control, the operation instruction information may be a voice event.

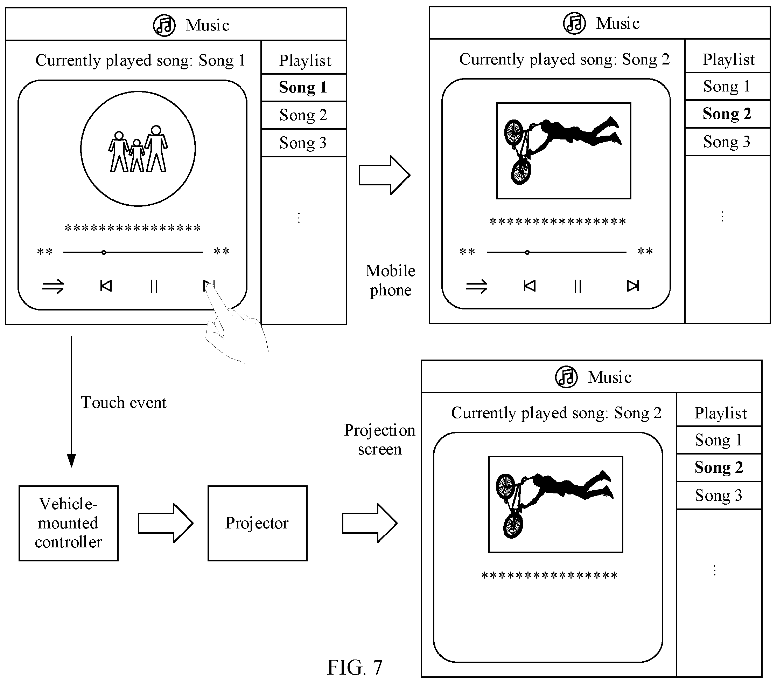

In a possible embodiment, with reference to FIG. 6, as shown in FIG. 7, the target device is the mobile phone having a touchscreen. When the user touches the next control in the related controls displayed on the touchscreen, the mobile phone may obtain a touch event used to play a next song. In this case, the mobile phone may play and display the next song on the touchscreen, that is, play and display a song 2, and send the touch event used to play the next song to the vehicle-mounted controller.

S204: When receiving the operation instruction information, the vehicle-mounted controller controls display of the vehicle-mounted display apparatus based on the operation instruction information.

In a possible embodiment, as shown in FIG. 7, when the vehicle-mounted controller receives the touch event that is sent by the mobile phone and that is used to play the next song, the vehicle-mounted controller may control, based on the touch event, the projection display apparatus to display the next song, that is, transmit display information of the song 2 to the projector in the projection display apparatus, so that the projector plays and displays the song 2 on the projection screen.

In this embodiment of this application, when the vehicle-mounted controller controls the vehicle-mounted display apparatus to perform display, the vehicle-mounted controller may send the display data to the target device having the interaction function. When receiving the display data, the target device may display the content displayed by the vehicle-mounted display apparatus. In this case, the user may perform the operation on the content displayed on the target device. In this way, the target device may send the operation instruction information generated based on the operation to the vehicle-mounted controller, so that the vehicle-mounted controller controls the display of the vehicle-mounted display apparatus based on the operation instruction information. Therefore, an interaction function of the vehicle-mounted display apparatus can be implemented through the target device. Further, when the vehicle-mounted display apparatus is a screen projection display apparatus, an interaction function of the screen projection display apparatus may be implemented through the target device, to improve flexibility of controlling vehicle-mounted projection. In addition, no additional remote control needs to be disposed for the vehicle-mounted projection apparatus, and security of vehicle-mounted projection may be further improved.

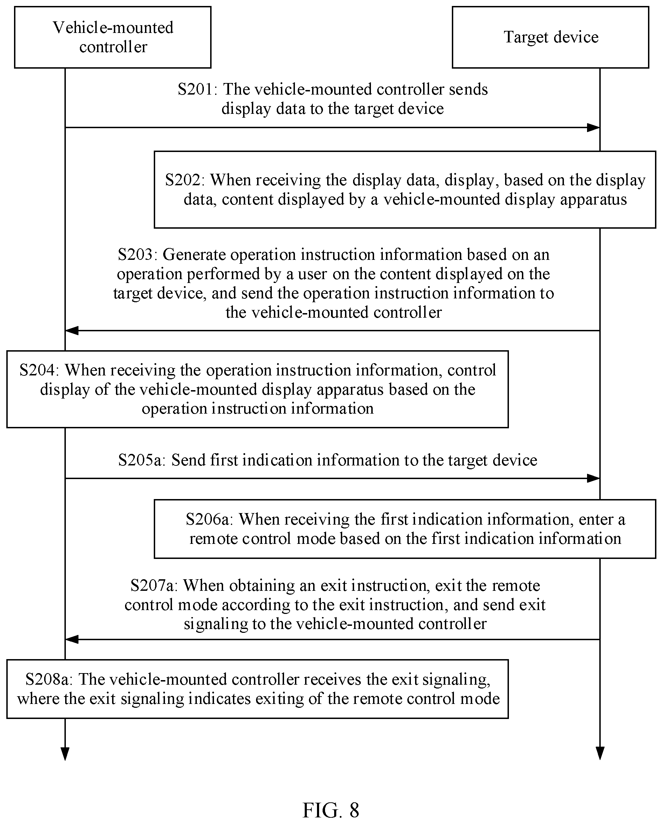

Further, in some possible embodiments, the displayed content may be an audio-visual video, and the operation performed by the user is an operation for full-screen display. Correspondingly, with reference to FIG. 4, as shown in FIG. 8, the method may further include S205a and S206a.

S205a: The vehicle-mounted controller sends first indication information to the target device, where the first indication information indicates the target device to enter a remote control mode.

The operation for full-screen display may be an operation that is triggered by the user on the target device and that is used to perform full-screen display. For example, the user may trigger the operation by double-tapping the touchscreen of the target device, or tapping a corresponding control for full-screen display, or performing a preset slide gesture. This is not specifically performed in embodiments of this application.

In addition, the audio-visual video may include but is not limited to a plurality of types of audios and videos, like a movie, a TV series, a documentary, a music video, a live video, a variety show video, and various short videos. Optionally, the audio-visual video may be specifically audios and videos provided by one or more applications installed on the vehicle-mounted controller. For example, the one or more applications may include one or more of a video playing application, a music application, a shopping application, a short video application, and the like.

Specifically, when the vehicle-mounted controller determines that the content displayed by the vehicle-mounted display apparatus is the audio-visual video, and the operation instruction information is operation instruction information used for full-screen display, the vehicle-mounted controller may send the first indication information to the target device, to indicate, based on the first indication information, the target device to enter the remote control mode.

S206a: When receiving the first indication information, the target device enters the remote control mode based on the first indication information, to control, in the remote control mode, a playing status of the audio-visual video of the vehicle-mounted display apparatus.

That the target device enters the remote control mode may be: The target device does not play and display the audio-visual video, but displays a software remote control, where the software remote control can be used to control the playing status of the audio-visual video. Optionally, the software remote control may include but is not limited to the following controls: an ok control, a progress bar, a fast-forward control, a rewind control, a previous control, a next control, a volume adjustment control, a pause control, a control for exiting full-screen display, a control for exiting the remote control mode, and the like. In addition, that the target device enters the remote control mode may further include: The target device displays key information of the audio-visual video. For example, the key information may include a still, a name, an episode number, an actor, a plot introduction, and the like of the audio-visual video.

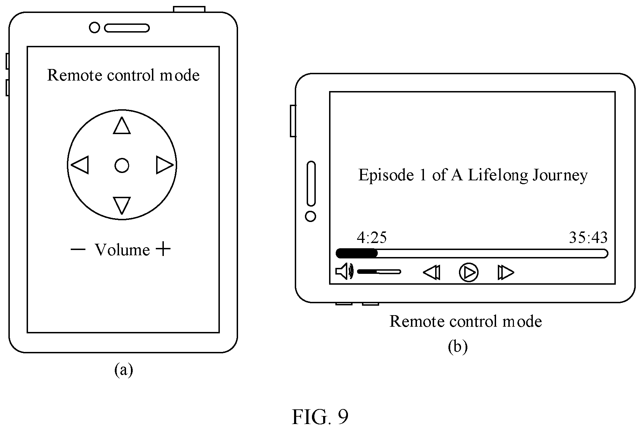

In a possible example, as shown in (a) in FIG. 9, an interface on which the target device enters the remote control mode may include: a software remote control. A display manner of the software remote control may be the same as a layout of a physical remote control. For example, the software remote control includes controls such as a pause control, a rewind control, a fast-forward control, a previous control, a next control, and a volume adjustment control.

In another possible example, as shown in (b) in FIG. 9, an interface on which the target device enters the remote control mode may include: key information of the audio-visual video and a software remote control. A display area of the key information may be an area in which the audio-visual video is played and displayed, and the software remote control may be below the display area of the key information. For example, the key information is "Episode 1 of ALifelong Journey", and the software remote control includes controls such as a progress bar, a volume adjustment control, a rewind control, a pause control, and a forward control.

In actual application, the target device may enter the remote control mode in a plurality of different display manners. The interfaces, shown in (a) and (b) in FIG. 9, on which the target device enters the remote control mode are merely examples, and constitute no limitation on embodiments of this application.

Specifically, after the target device receives the first indication information sent by the vehicle-mounted controller, and enters the remote control mode based on the first indication information, the target device may control, in the remote control mode, a video playing status of the vehicle-mounted display apparatus. For example, the user may perform an operation on various controls displayed in the remote control mode, such as a rewind control, a pause control, and a forward control. In this way, the target device may obtain corresponding operation instruction information, to control the playing status of the audio-visual video of the vehicle-mounted display apparatus based on the operation instruction information.

In addition, after the target device enters the remote control mode, the user may further perform an operation on the target device, so that the target device exits the remote control mode. Correspondingly, as shown in FIG. 8, the method may further include S207a and S208a.

S207a: When obtaining an exit instruction, the target device exits the remote control mode according to the exit instruction, and sends exit signaling to the vehicle-mounted controller.

The exit instruction may be triggered by the user, and may be triggered by the user by performing an operation on the target device. For example, the user may tap a control for exiting the remote control mode on a software remote control of the target device, or trigger the exit instruction by performing a preset slide gesture or tap gesture, or by using a corresponding physical button or a combination of buttons. This is not specifically performed in this embodiment of this application.

Specifically, when the target device obtains the exit instruction, the target device may exit the remote control mode, to normally display the audio-visual video displayed by the vehicle-mounted display apparatus, and send the exit signaling to the vehicle-mounted controller, to notify the vehicle-mounted controller of information that the target device exits the remote control mode.

S208a: The vehicle-mounted controller receives the exit signaling, where the exit signaling indicates exiting of the remote control mode.

Specifically, when the vehicle-mounted controller receives the exit signaling sent by the target device, the vehicle-mounted controller may determine, based on the exit signaling, that the target device exits the remote control mode, so that the vehicle-mounted controller may subsequently continue to control display of the vehicle-mounted display apparatus by receiving the operation instruction information from the target device.

In a possible embodiment of this application, when the displayed content is the audio-visual video, and the operation performed by the user is an operation for full-screen display, the vehicle-mounted controller indicates, based on the first indication information, the target device to enter the remote control mode, so that the target device controls, in the remote control mode, a video playing status of the vehicle-mounted display apparatus. This implements control of the target device on the vehicle-mounted display apparatus. In addition, the target device does not need to continue to play the audio-visual video in the remote control mode. This can further reduce power consumption of the target device.

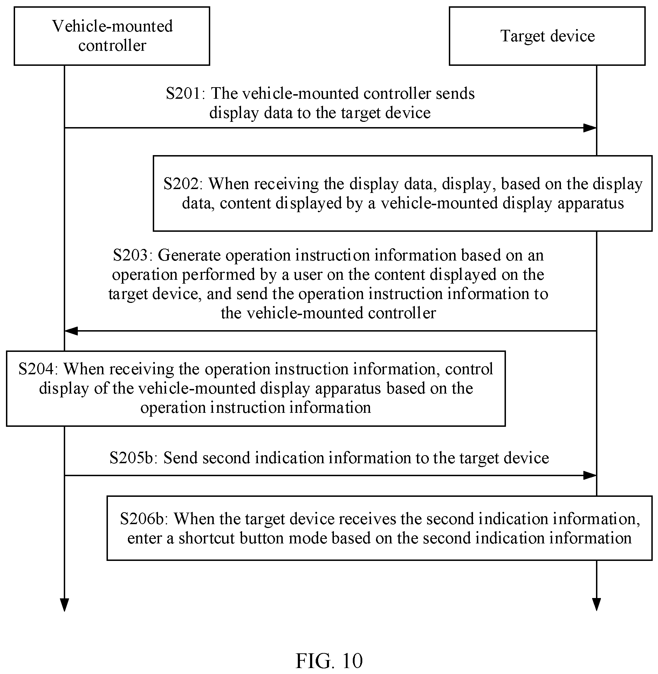

Further, in some other possible embodiments, the displayed content may be a call video. Correspondingly, with reference to FIG. 4, as shown in FIG. 10, the method may further include S205b and S206b.

S205b: The vehicle-mounted controller sends second indication information to the target device, where the second indication information indicates the target device to enter a shortcut button mode.

The call video may refer to corresponding video data during a video call. The call video may be video data generated in a video call process by one or more applications installed on the vehicle-mounted controller. For example, the one or more applications may include one or more of instant messaging applications such as a phone call and a short message service.

Specifically, when the vehicle-mounted controller determines that the content displayed by the vehicle-mounted display apparatus is the call video, the vehicle-mounted controller may send the second indication information to the target device, to indicate, based on the second indication information, the target device to enter the shortcut button mode.

S206b: When receiving the second indication information, the target device enters the shortcut button mode based on the second indication information, to control, in the shortcut button mode, a status of the call video of the vehicle-mounted display apparatus.

That the target device enters the shortcut button mode may be that: The target device does not play or display the call video, but displays at least one shortcut button, where the at least one shortcut button may be used to control a playing status of the call video. Optionally, the at least one shortcut button may include but is not limited to the following controls: a mute control, a control for turning off a video, a control for switching a voice call, a control for setting background, a control for switching display, a volume adjustment control, a control for exiting the shortcut button mode, and the like. In addition, that the target device enters the shortcut button mode may further include: The target device displays call contact information of the call video. For example, the call contact information may include information such as a nickname, a remark, a profile picture, and an input status of a call peer.

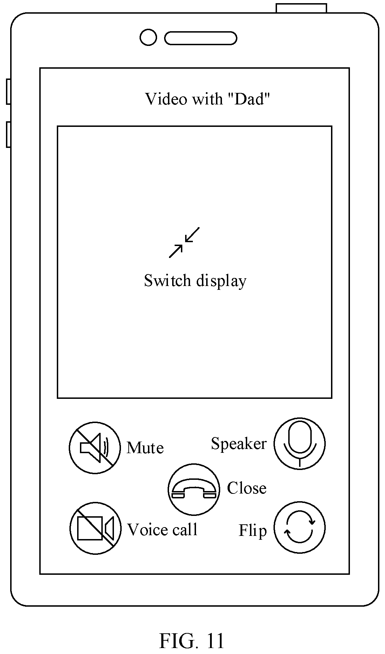

In a possible example, as shown in FIG. 11, an interface on which the target device enters the shortcut button mode may include a plurality of shortcut buttons and a remark of a call peer. For example, the plurality of shortcut buttons include Switch display, Mute, Close, Voice call, and Flip, and the remark of the call peer is "Dad". In actual application, when the target device enters the shortcut button mode, there may be another different display manner. The interface, shown in FIG. 11, on which the target device enters the shortcut button mode is merely an example, and does not constitute a limitation on this embodiment of this application.

Specifically, after the target device receives the second indication information sent by the vehicle-mounted controller, and enters the shortcut button mode based on the second indication information, the target device may control, in the shortcut button mode, the status of the call video of the vehicle-mounted display apparatus. For example, the user may perform an operation on various controls displayed in the shortcut button mode, such as a control for switching display, a mute control, a speaker control, a close control, a voice call control, and a flip control. In this way, the target device may obtain corresponding operation instruction information, and control a status of the call video of the vehicle-mounted display apparatus based on the operation instruction information.

In addition, after the target device enters the shortcut button mode, the user may further perform an operation on the target device, so that the target device exits the shortcut button mode. An instruction for exiting the shortcut button mode may be triggered by the user. For example, the user may tap a control that is displayed on the target device and that is for exiting the shortcut button mode, or trigger the instruction by using a preset slide gesture or tap gesture. This is not specifically performed in this embodiment of this application. In this way, the target device may exit the shortcut button mode, to normally display the call video displayed by the vehicle-mounted display apparatus. In addition, the target device may further notify the vehicle-mounted controller of information that the target device exits the shortcut button mode.

In a possible embodiment of this application, when the displayed content is the call video, the vehicle-mounted controller indicates, based on the second indication information, the target device to enter the shortcut button mode, so that the target device controls, in the shortcut button mode, a status of the call video of the vehicle-mounted display apparatus. This implements control of the target device on the vehicle-mounted display apparatus. In addition, the target device does not need to continue to play the call video in the shortcut button mode. This can further reduce power consumption of the target device.

Further, before the vehicle-mounted controller controls display of the vehicle-mounted display apparatus by using the target device, the vehicle-mounted controller may first establish a connection to the target device, so that the vehicle-mounted controller and the target device may communicate with each other through the connection. For example, display data, operation instruction information, first indication information, second indication information, and exit signaling are transmitted through the connection. The following describes a process of establishing a connection between the vehicle-mounted controller and the target device.

In a possible embodiment, the connection may be a WLAN connection, for example, a Wi-Fi connection. The target device may obtain connection information of a Wi-Fi network, and establish a connection to the vehicle-mounted controller based on the connection information. After the connection is established, when the vehicle-mounted controller controls the vehicle-mounted display apparatus to perform display, for example, controls a screen projection display apparatus to perform display, the vehicle-mounted controller and the target device may control display of the screen projection display apparatus according to the display control method provided above.

The connection information may include a service set identifier (service set identifier, SSID) and a password of the Wi-Fi network. Optionally, a manner in which the target device obtains the connection information of the Wi-Fi network may include: receiving the connection information entered by the user; and obtaining the connection information by scanning. For example, the connection information may be in a form of a two-dimensional code, and the two-dimensional code may be stored in the target device, or may be pasted on a vehicle (for example, pasted behind a driver's seat or a front passenger's seat), or displayed on a vehicle-mounted display apparatus (for example, displayed on a projection screen). Further, the connection information may further include encoding information of the display data. For example, when the display data is video data, the encoding information may be H.264.

In an example, a process of establishing a connection between the vehicle-mounted controller and the target device includes: S31: The vehicle-mounted controller controls the vehicle-mounted display apparatus to display the connection information of the Wi-Fi network, where the connection information is used by the target device to establish a connection to the vehicle-mounted controller; and S32: The target device scans to obtain the connection information, and establishes a Wi-Fi connection to the vehicle-mounted controller based on the connection information.

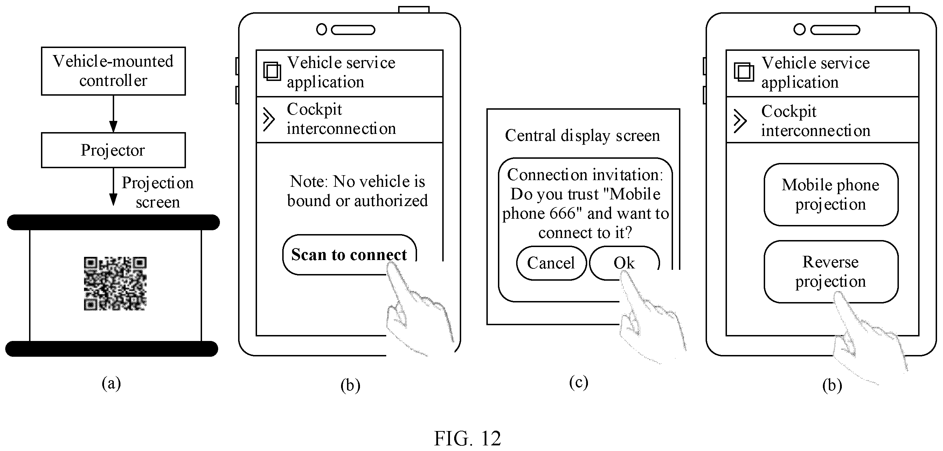

For example, as shown in (a) in FIG. 12, the vehicle-mounted display apparatus is a projection display apparatus, the vehicle-mounted controller sends a two-dimensional code including connection information of a Wi-Fi network to a projector in the projection display apparatus, and the projector projects the two-dimensional code onto a projection screen. As shown in (b) in FIG. 12, the target device is a mobile phone, and a code scanning connection function is set in a cockpit service option provided by a vehicle service application installed in the mobile phone. A user scans, through the function, the two-dimensional code displayed on the projection screen, to obtain the connection information in the two-dimensional code, and sends a connection invitation to the vehicle-mounted controller based on the connection information. When the vehicle-mounted controller receives the connection invitation, as shown in (c) in FIG. 12, the vehicle-mounted controller may display information about the connection invitation (Do you trust "Mobile phone 666" and want to connect to it?) on a central display screen of a vehicle, and display controls used for cancellation and confirmation, and the user taps an ok control to establish a Wi-Fi connection between the mobile phone and the vehicle-mounted controller.

Optionally, the connection information is further used by the target device to trigger a reverse projection function. The reverse projection function is to project content displayed by the vehicle-mounted display apparatus onto a display of the target device for display. That is, when the target device obtains the connection information, the target device may further trigger the reverse projection function. For example, as shown in (d) in FIG. 12, after the Wi-Fi connection is established between the mobile phone and the vehicle-mounted controller, the mobile phone may display a function selection interface. The function selection interface includes the following controls: a mobile phone projection control and a reverse projection control. Mobile phone projection herein is projection from the mobile phone to the vehicle-mounted display apparatus, and content displayed on the mobile phone is projected onto the vehicle-mounted display apparatus for display. In this way, the user may enable the reverse projection function of the mobile phone by tapping the reverse projection control, for displaying display data transmitted by the vehicle-mounted controller.

In addition, after obtaining the connection information, the target device may further store the connection information locally. In this way, when the target device subsequently needs to establish a connection to the vehicle-mounted controller, the target device may directly establish a connection to the vehicle-mounted controller based on the connection information. Alternatively, when subsequently obtaining connection information used to establish a connection to the vehicle-mounted controller, the target device may compare two pieces of connection information, and when the two pieces of connection information is consistent, the target device establishes a connection to the vehicle-mounted controller based on the connection information.

In another possible embodiment, the connection may be a Wi-Fi connection, and the target device may be an authorized device. When a Wi-Fi function of the target device is enabled and the target device is within coverage of a network in which the vehicle-mounted controller is located, the target device may automatically establish a connection to the vehicle-mounted controller. Optionally, a process of requesting authorization by the target device may include: The target device sends authentication information to a server, where the authentication information includes information about the target device, and the information may include a device identifier of the target device and user information (for example, information about a logged-in vehicle owner) of the target device; when receiving the authentication information, the server may perform authentication based on the information about the target device, and send an authorization indication to the target device after the authentication succeeds; and the target device receives the authorization indication, where the authorization indication indicates that the target device is an authorized device, the authorization indication includes the connection information, and the connection information is used to establish a connection to the vehicle-mounted controller. In addition, the server may further send the authorization information to the vehicle-mounted controller, where the authorization information may include the information about the target device. When receiving the authorization information, the vehicle-mounted controller may determine, based on the authorization information, that the target device is an authorized device. In this way, when the target device is within coverage of a network in which the vehicle-mounted controller is located, the target device may automatically establish a connection to the vehicle-mounted controller. Optionally, the connection information may include an SSID and a password of a Wi-Fi network in which the vehicle-mounted controller is located. Further, the connection information may further include encoding information of the display data. For example, when the display data is video data, the encoding information may be H.256.

In still another possible embodiment, when the target device is an authorized device, and the vehicle-mounted controller receives authorization information of the target device (that is, the vehicle-mounted controller determines that the target device is the authorized device), if both the vehicle-mounted controller and the target device support Bluetooth, the connection may be a Bluetooth connection, and the target device may obtain connection information of the Bluetooth connection, and establish a connection to the vehicle-mounted controller based on the connection information. The connection information may include an identifier of the vehicle-mounted controller and a media access control (media access control, MAC) address. Optionally, a manner in which the target device obtains the connection information of the Bluetooth connection may include: obtaining the connection information of the Bluetooth connection through a Bluetooth search function of the target device.

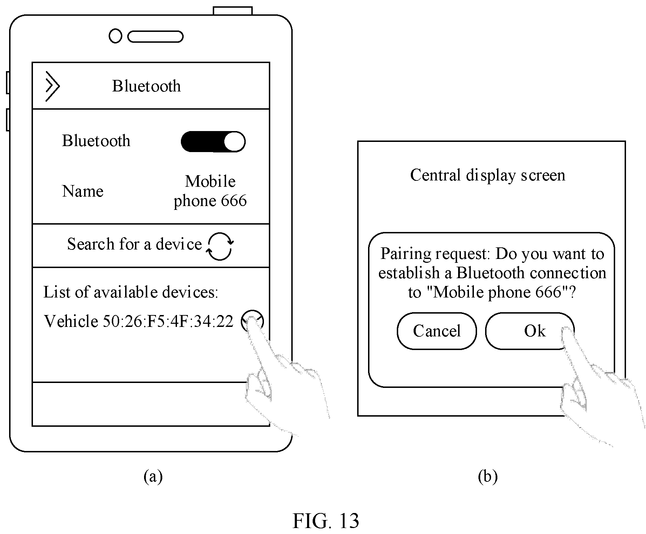

In an example, when the target device is an authorized device, and the vehicle-mounted controller determines that the target device is the authorized device, as shown in (a) in FIG. 13, the target device is a mobile phone, and a user may enable Bluetooth of the mobile phone. After Bluetooth is enabled, the mobile phone may search for and display an available device list (for example, including an identifier of an available device and a MAC address of Bluetooth) through a search function. The user selects device information corresponding to the vehicle-mounted controller from the available device list, and the mobile phone may send, based on triggering of the user, a pairing request to the vehicle-mounted controller to perform pairing. When the vehicle-mounted controller receives the pairing request, as shown in (b) in FIG. 13, the vehicle-mounted controller may display information about the pairing request (Do you want to establish a Bluetooth connection to "Mobile phone 666"?) on a central display screen of a vehicle, and display controls used for cancellation and confirmation, and the user taps an ok control to establish a Bluetooth connection between the mobile phone and the vehicle-mounted controller.

In another possible embodiment, when the target device is an authorized device, and the vehicle-mounted controller receives authorization information of the target device (that is, the vehicle-mounted controller determines that the target device is the authorized device), if both the vehicle-mounted controller and the target device support NFC, the connection may be an NFC connection, and the target device may obtain connection information of the NFC connection, and establish a connection to the vehicle-mounted controller based on the connection information. Optionally, a manner in which the target device obtains the connection information of the NFC connection may include: touching a place in which an NFC mark is set on a vehicle, to obtain the connection information of the NFC connection.

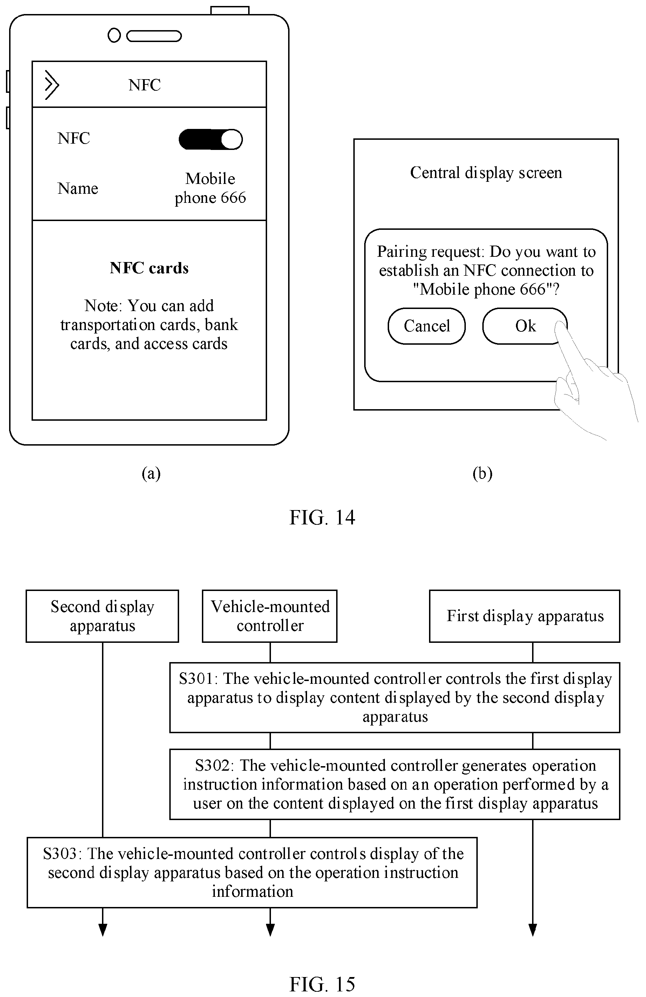

In an example, when the vehicle-mounted controller determines that the target device is the authorized device, as shown in (a) in FIG. 14, the target device is a mobile phone, and an NFC mark is set on a rear-view mirror of a vehicle in which the vehicle-mounted controller is located. A user may enable an NFC function of the mobile phone, and use the mobile phone to touch the NFC mark on the rear-view mirror. Based on triggering of the user, the mobile phone may send a connection request to the vehicle-mounted controller, where the connection request is used for pairing. When the vehicle-mounted controller receives the connection request, as shown in (b) in FIG. 14, the vehicle-mounted controller may display information about the connection request (Do you want to establish an NFC connection to "Mobile phone 666"?) on a central display screen of the vehicle, and display controls used for cancellation and confirmation, and the user taps an ok control to establish an NFC connection between the mobile phone and the vehicle-mounted controller.

Optionally, when the vehicle-mounted controller determines that the target device is the authorized device, the vehicle-mounted controller may be further connected to the target device in a wired manner. For example, the target device is a mobile phone, and the mobile phone may establish a wired connection to the vehicle-mounted controller through a transmission line like a charging cable, and communicate with the vehicle-mounted controller through the wired connection.

In the foregoing several embodiments, when the connection is the Bluetooth connection, the NFC connection, or the wired connection, the target device may request authentication from the server based on the foregoing authentication request process, and the server may also send, to the vehicle-mounted controller, the authorized device including the information about the target device. For details, refer to the foregoing descriptions. Details are not described in this embodiment of this application again.

In a possible embodiment of this application, when the target device is an authorized device, and the vehicle-mounted controller determines that the target device is the authorized device, the target device may establish a wireless connection like a Wi-Fi connection, a Bluetooth connection, or an NFC connection to the vehicle-mounted controller, to communicate with the vehicle-mounted controller through the wireless connection. The target device establishes a wired connection to the vehicle-mounted controller through a transmission line, to communicate with the vehicle-mounted controller through the wired connection. Therefore, diversity and flexibility of establishing a connection between the target device and the vehicle-mounted controller are improved.

FIG. 15 is a schematic flowchart of another display control method according to an embodiment of this application. The method may be applied to a vehicle-mounted terminal. The vehicle-mounted terminal includes a vehicle-mounted controller, a first display apparatus, and a second display apparatus. The method includes the following steps.

S301: The vehicle-mounted controller controls the first display apparatus to display content displayed by the second display apparatus.

The vehicle-mounted controller may be a cockpit domain controller CDC. The first display apparatus may be a display apparatus having an interaction function, for example, a central display screen, a rear-row display, or an armrest screen. The second display apparatus may be a screen projection display apparatus having no interaction function, and the screen projection display apparatus may be a projection display apparatus and include a projector and a projection screen. Optionally, the vehicle-mounted controller may be connected to the first display apparatus through a transmission line. The transmission line may be configured to transmit the content displayed by the second display apparatus, a related instruction in the following, and the like. For example, the transmission line may be a low-voltage differential signaling (low-voltage differential signaling, LVDS) video transmission line.

In addition, the content displayed by the second display apparatus may be some applications that are not related to vehicle control and that are selected from applications installed on the vehicle-mounted controller, or display of the applications. Optionally, the displayed content may be entertainment and communication software, or may be one or a combination of text information, image information, video information, or the like related to entertainment and communication software. The entertainment and communication software may be software controlled by the vehicle-mounted controller to run. The text information may be news, a novel, or the like, and the video information may be an audio-visual video, a call video, or the like.

S302: The vehicle-mounted controller generates operation instruction information based on an operation performed by a user on the content displayed on the first display apparatus, where the operation instruction information indicates the operation performed by the user.

When the user needs to interact with the second display apparatus, the user may perform an operation on the content displayed on the first display apparatus. The operation may be a touch operation performed on a touchscreen of the first display apparatus, or may be an operation triggered by using a physical button of the first display apparatus, or may be an operation triggered through voice control. This is not specifically limited in this embodiment of this application.

In addition, when the user performs an operation on the content displayed on the first display apparatus, the vehicle-mounted controller may generate operation instruction information corresponding to the operation. For example, when the operation is a touch operation, the operation instruction information may be a touch event; when the operation is an operation triggered by using a physical button, the operation instruction information may be a button event; or when the operation is an operation triggered through voice control, the operation instruction information may be a voice event.

S303: The vehicle-mounted controller controls display of the second display apparatus based on the operation instruction information.

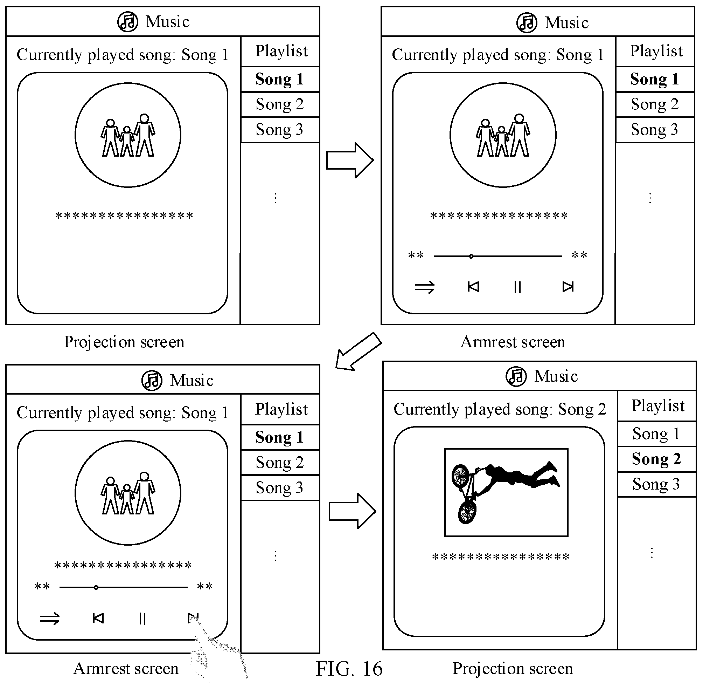

In a possible embodiment, as shown in FIG. 16, the first display apparatus is an armrest screen, the second display apparatus is a projection display apparatus (including a projector and a projection screen), and a playing interface of a song 1 in a music application is displayed on the projection display apparatus. In this case, the vehicle-mounted controller may control the armrest screen to display the playing interface of the song 1 in the music application, and control the armrest screen to display related controls used for interaction, such as a fast-forward control, a previous control, a pause control, and a next control. When the user touches the next control in the related controls displayed on the armrest screen, the vehicle-mounted controller may obtain a touch event used to play a next song, to control, based on the touch event, the projection display apparatus to play and display the next song, that is, control the projection display apparatus to play and display a song 2. In this case, the vehicle-mounted controller may further control the armrest screen to play and display the next song. In FIG. 16, an example in which the displayed content is a song in the music application, a playlist includes the song 1, the song 2, and a song 3, and the song 1 is a currently played song is used for description.

Optionally, the displayed content may be an audio-visual video, and the operation performed by the user is an operation for full-screen display. Correspondingly, the vehicle-mounted controller may further control the first display apparatus to enter a remote control mode, so that the first display apparatus controls display of the second display apparatus in the remote control mode. Alternatively, the displayed content may be a call video. Correspondingly, the vehicle-mounted controller may further control the first display apparatus to enter a shortcut button mode, so that the first display apparatus controls display of the second display apparatus by using a shortcut button.

Further, the vehicle-mounted controller may further control the first display apparatus to exit the remote control mode, and control the first display apparatus to exit the shortcut button mode.

In the foregoing embodiment, related descriptions of controlling, by the vehicle-mounted controller, the first display apparatus to enter the remote control mode and the shortcut button mode, and exit the remote control mode and the shortcut button mode are similar to the foregoing related descriptions of controlling, by the vehicle-mounted controller, the target device to enter the remote control mode and the shortcut button mode, and exit the remote control mode and the shortcut button mode. For details, refer to the foregoing descriptions. Details are not described in this embodiment of this application.

In this embodiment of this application, when the vehicle-mounted controller controls the screen projection display apparatus to perform displaying, the vehicle-mounted controller may control the armrest screen having an interaction function in the vehicle to display content displayed by the screen projection display apparatus. In this case, the user may perform an operation on the content displayed on the armrest screen, in this way, the vehicle-mounted controller may obtain corresponding operation instruction information, and control display of the screen projection display apparatus based on the operation instruction information, so that an interaction function of the screen projection display apparatus can be implemented by using the armrest screen. This improves flexibility of controlling vehicle-mounted projection, and no additional remote control needs to be disposed for the vehicle-mounted projection apparatus, and security of vehicle-mounted projection may be further improved.

The solutions provided in embodiments of this application are mainly described above from a perspective of interaction between apparatuses. It may be understood that, to implement the foregoing functions, the vehicle-mounted controller, the target device, and the like include corresponding hardware structures and/or software modules for performing the functions. A person skilled in the art should be easily aware that, in combination with units and algorithm steps of the examples described in embodiments disclosed in this specification, this application may be implemented by hardware or a combination of hardware and computer software. Whether a function is performed in a manner of hardware or computer software driving hardware depends on a specific application and a design constraint condition of the technical solution. A person skilled in the art may use different methods to implement the described functions for each particular application, but it should not be considered that the implementation goes beyond the scope of this application.

In this embodiment of this application, functional module division may be performed on the vehicle-mounted controller and the target device based on the foregoing method examples. For example, each functional module may be obtained through division based on each corresponding function, or two or more functions may be integrated into one processing module. The foregoing integrated module may be implemented in a form of hardware, or may be implemented in a form of a software functional module. It should be noted that, in embodiments of this application, module division is an example, and is merely a logical function division. In actual implementation, another division manner may be used.

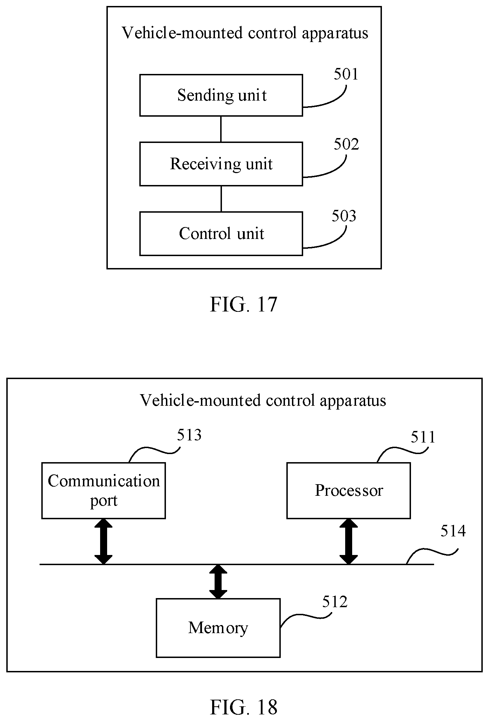

When an integrated unit is used, FIG. 17 is a diagram of a possible structure of a vehicle-mounted control apparatus according to an embodiment of this application. The apparatus may be used as a vehicle-mounted controller. The apparatus includes a sending unit 501, a receiving unit 502, and a control unit 503. In a possible implementation, the sending unit 501 may be configured to support the apparatus in performing S201 in the foregoing method embodiment; the receiving unit 502 is configured to perform the step of receiving the operation instruction information in the foregoing method embodiment; and the control unit 503 is configured to perform S204 in the foregoing method embodiment, or perform S301 to S303 in the foregoing method embodiment.

Further, in a possible embodiment, the sending unit 501 may be further configured to support the apparatus in performing S205a in the foregoing method embodiment; and the receiving unit 502 may be further configured to support the apparatus in performing S208a in the foregoing method embodiment.

Further, in another possible embodiment, the sending unit 501 may be further configured to support the apparatus in performing S205b in the foregoing method embodiment; and the receiving unit 502 may be further configured to support the apparatus in performing the foregoing method embodiment to receive a notification of exiting the shortcut button mode.

All related content of each step involved in the foregoing method embodiment may be referenced to a function description of a corresponding functional module, and details are not described herein again. The devices (such as the vehicle-mounted terminal and/or the target device) provided in embodiments of this application are configured to perform functions of the corresponding devices in the foregoing embodiments. Therefore, this can achieve a same effect as the foregoing method.

In a possible embodiment, the vehicle-mounted controller is configured to send display data to the target device. The display data indicates the target device to display content displayed by the vehicle-mounted display apparatus. The target device is configured to: receive the display data, display, based on the display data, the content displayed by the vehicle-mounted display apparatus, generate operation instruction information based on an operation performed by a user on the content displayed on the target device, and send the operation instruction information to the vehicle-mounted controller. The operation instruction information indicates the user to perform an operation. The vehicle-mounted controller is further configured to obtain the operation instruction information, and control display of the vehicle-mounted display apparatus based on the operation instruction information.

Based on hardware implementation, in this embodiment of this application, the control unit 503 may be a processor of the apparatus, the sending unit 501 may be a transmitter of the apparatus, the receiving unit 502 may be a receiver of the apparatus, the transmitter and the receiver may be usually integrated together to serve as a transceiver, and a specific transceiver may also be referred to as a communication port or an interface circuit.

FIG. 18 is a diagram of another possible structure of the display control apparatus in the foregoing embodiment according to an embodiment of this application. The apparatus includes a processor 511, and may further include a memory 512, a communication port 513, and a bus 514. The processor 511, the memory 512, and the communication port 513 are connected through the bus 514.

The processor 511 is configured to control and manage an action of the apparatus. The processor 511 is configured to perform S204 in the foregoing method embodiment, or perform S301 to S303 in the foregoing method embodiment. The communication port 513 is configured to support the apparatus in communicating, for example, support the apparatus in communicating with a network device.

In this embodiment of this application, the processor 511 may be a central processing unit, a general-purpose processor, a digital signal processor, an application-specific integrated circuit, a field programmable gate array or another programmable logic device, a transistor logical device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 514 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in the foregoing figure, but this does not mean that there is only one bus or only one type of bus.

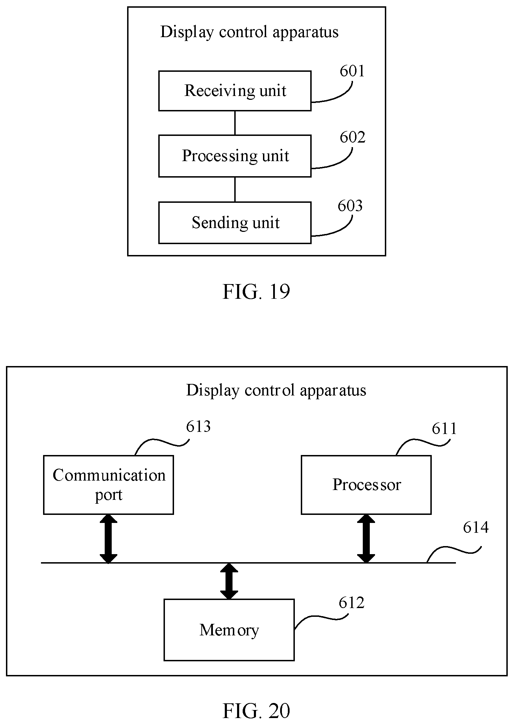

When an integrated unit is used, FIG. 19 is a diagram of a possible structure of a display control apparatus according to an embodiment of this application. The apparatus may be used as a target device or a chip system built in a target. The apparatus includes a receiving unit 601, a processing unit 602, and a sending unit 603. In a possible implementation, the receiving unit 601 may be configured to support the apparatus in performing the step of receiving the display data in S202 in the foregoing method embodiment; the processing unit 602 is configured to support the apparatus in performing the step of displaying the content displayed by the vehicle-mounted display apparatus in S202 and performing the step of obtaining the operation instruction in S203 in the foregoing method embodiment; and the sending unit 603 is configured to support the apparatus in performing the step of sending the operation instruction information in S203 in the foregoing method embodiment.

Further, in a possible embodiment, the receiving unit 601 may be further configured to support the apparatus in performing the step of receiving the first indication information in S206a in the foregoing method embodiment; the processing unit 602 may be further configured to support the apparatus in performing the step of entering the remote control mode in S206a, the step of obtaining the exit instruction in S207a, and the step of exiting the remote control mode in S207a in the foregoing method embodiment; and the sending unit 603 may be configured to support the apparatus in performing the step of sending the exit signaling in S207a in the foregoing method embodiment.

Further, in another possible embodiment, the receiving unit 601 may be further configured to support the apparatus in performing the step of receiving the second indication information in S206b in the foregoing method embodiment; the processing unit 602 may be further configured to support the apparatus in performing the step of entering the shortcut button mode, obtaining the exit instruction, and exiting the shortcut button mode in S206b in the foregoing method embodiment; and the sending unit 603 may be configured to support the apparatus in performing the step of sending signaling for exiting a shortcut button mode in the foregoing method embodiment.

Based on hardware implementation, in this embodiment of this application, the processing unit 602 may be a processor of the apparatus, the receiving unit 601 may be a receiver of the apparatus, the sending unit 603 may be a transmitter of the apparatus, and the transmitter and the receiver may be usually integrated together to serve as a transceiver. A specific transceiver may also be referred to as a communication port or an interface circuit.

FIG. 20 is a diagram of another possible structure of the display control apparatus in the foregoing embodiment according to an embodiment of this application. The apparatus includes a processor 611, and may further include a memory 612, a communication port 613, and a bus 614. The processor 611, the memory 612, and the communication port 613 are connected through the bus 614.

The processor 611 is configured to control and manage an action of the apparatus. In a possible embodiment, the processor 611 may be configured to support the apparatus in performing one or more of the step of displaying the content displayed by the vehicle-mounted display apparatus, the step of entering the remote control mode and the step of exiting the remote control mode, and the step of entering the shortcut button mode and the step of exiting the shortcut button mode in S202 in the foregoing method embodiment. The communication port 613 is configured to support the apparatus in communicating, for example, support the apparatus in communicating with a terminal.

In this embodiment of this application, the processor 611 may be a central processing unit, a general-purpose processor, a digital signal processor, an application-specific integrated circuit, a field programmable gate array or another programmable logic device, a transistor logical device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 614 in the foregoing figure may be a peripheral component interconnect PCI bus, an extended industry standard architecture EISA bus, or the like. The bus may be classified into an address bus, a data bus, a control bus, and the like. For ease of representation, only one thick line is used to represent the bus in the foregoing figure, but this does not mean that there is only one bus or only one type of bus.

An embodiment of this application further provides a display control system. The display control system may include a vehicle-mounted terminal and a target device. The vehicle-mounted terminal and the target device may be configured to implement any display control method provided in the foregoing embodiments. Optionally, the vehicle-mounted terminal includes a vehicle-mounted controller and a screen projection display apparatus.

All related content of each step involved in the foregoing method embodiment may be referenced to a function description of a corresponding functional module, and details are not described herein again. The devices (such as the vehicle-mounted terminal and/or the target device) provided in embodiments of this application are configured to perform functions of the corresponding devices in the foregoing embodiments. Therefore, this can achieve a same effect as the foregoing method.

An embodiment of this application further provides a terminal device. The terminal device includes a processor and a memory. The memory stores instructions. When the instructions are run on the processor, the terminal device is enabled to perform the steps of the vehicle-mounted controller in the display control method provided in the foregoing method embodiment.

An embodiment of this application further provides a terminal device. The terminal device includes a processor and a memory. The memory stores instructions. When the instructions are run on the processor, the terminal device is enabled to perform the steps of the target device in the display control method provided in the foregoing method embodiment.

An embodiment of this application further provides a vehicle-mounted terminal. The vehicle-mounted terminal includes at least one processor and at least one display. The at least one processor is configured to control display of the at least one display, to perform the steps of the display control method provided in the method embodiment related to FIG. 16.

An embodiment of this application further provides a display control system. The system includes a vehicle-mounted controller and a vehicle-mounted display apparatus. The vehicle-mounted controller is configured to control display of the vehicle-mounted display apparatus. The vehicle-mounted controller may be any vehicle-mounted control apparatus provided above, and is configured to perform the steps of the vehicle-mounted controller in the foregoing method embodiment.

An embodiment of this application further provides a vehicle. The vehicle includes the display control system provided above.

An embodiment of this application further provides a chip system. The chip system may be used in the terminal device in the foregoing embodiment. The chip system includes at least one processor and at least one interface circuit. The processor may be a processor in the foregoing terminal device. The processor and the interface circuit may be interconnected through a line. The processor may receive computer instructions from a memory of the terminal device through the interface circuit, and execute the computer instructions. When the computer instructions are executed by the processor, the terminal device may be enabled to perform the steps performed by the mobile phone or the tablet computer in the foregoing embodiments. Certainly, the chip system may further include another discrete device. This is not specifically limited in this embodiment of this application.

According to another aspect of this application, a computer-readable storage medium is provided. The computer-readable storage medium stores a computer program or instructions. When the computer program or the instructions are run, the steps of the vehicle-mounted controller in the method embodiment provided in FIG. 4, FIG. 8, or FIG. 10 are implemented.

According to another aspect of this application, a computer-readable storage medium is provided. The computer-readable storage medium stores a computer program or instructions. When the computer program or the instructions are run, the steps of the target device in the method embodiment provided in FIG. 4, FIG. 8, or FIG. 10 are implemented.

According to another aspect of this application, a computer-readable storage medium is provided. The computer-readable storage medium stores a computer program or instructions. When the computer program or the instructions are run, the steps in the method embodiment provided in FIG. 16 are implemented.

According to still another aspect of this application, a computer program product is provided. The computer program product includes a computer program (which may also be referred to as code or instructions). When the computer program is run, a computer is enabled to perform the steps of the vehicle-mounted controller in the method embodiment provided in FIG. 4, FIG. 8, or FIG. 10.

According to still another aspect of this application, a computer program product is provided. The computer program product includes a computer program (which may also be referred to as code or instructions). When the computer program is run, a computer is enabled to perform the steps of the target device in the method embodiment provided in FIG. 4, FIG. 8, or FIG. 10.

According to still another aspect of this application, a computer program product is provided. The computer program product includes a computer program (which may also be referred to as code or instructions). When the computer program is run, a computer is enabled to perform the steps in the method embodiment provided in FIG. 16.

The foregoing descriptions about implementations allow a person skilled in the art to clearly understand that, for the purpose of convenient and brief description, division of the foregoing functional modules is used as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some ports. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the part essentially contributing to the technical solutions in embodiments of this application or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code such as a USB flash drive, a removable hard disk, a read-only memory (read-only memory, ROM), a random access memory (random access memory, RAM), a magnetic disk, or an optical disc.

Finally, it should be noted that the foregoing descriptions are merely specific implementations of this application, but are not intended to limit the protection scope of this application. Any variation or replacement within a technical scope disclosed in this application shall fall within the protection scope of this application. Therefore, the protection scope of this application shall be subject to the protection scope of the claims.

## Claims

1. A display control method, wherein the method comprises:
sending, by a vehicle-mounted controller, display data to a target device, wherein the display data indicates the target device to display content displayed by a vehicle-mounted display apparatus controlled by the vehicle-mounted controller;
obtaining, by the vehicle-mounted controller, operation instruction information, wherein the operation instruction information indicates an operation performed by a user on the content displayed on the target device; and
controlling, by the vehicle-mounted controller, display of the vehicle-mounted display apparatus based on the operation instruction information.

2. The method according to claim 1, wherein the displayed content is an audio-visual video, the operation performed by the user is an operation for full-screen display, and the method further comprises:
sending, by the vehicle-mounted controller, first indication information to the target device, wherein the first indication information indicates the target device to enter a remote control mode, and the target device is configured to control, in the remote control mode, a playing status of the audio-visual video of the vehicle-mounted display apparatus.

3. The method according to claim 2, wherein the method further comprises:
receiving, by the vehicle-mounted controller, exit signaling, wherein the exit signaling indicates exiting of the remote control mode.

4. The method according to claim 1, wherein the displayed content is a call video, and the method further comprises:
sending, by the vehicle-mounted controller, second indication information to the target device, wherein the second indication information indicates the target device to enter a shortcut button mode, and the target device is configured to control, in the shortcut button mode, a status of the call video of the vehicle-mounted display apparatus.

5. The method according to any one of claims 1 to 4, wherein the method further comprises:
controlling, by the vehicle-mounted controller, the vehicle-mounted display apparatus to display connection information, wherein the connection information is used by the target device to establish a connection to the vehicle-mounted controller.

6. The method according to any one of claims 1 to 5, wherein the method further comprises:
receiving, by the vehicle-mounted controller, authorization information, wherein the authorization information comprises information about the target device; and
determining, by the vehicle-mounted controller based on the authorization information, that the target device is an authorized device.

7. The method according to any one of claims 1 to 6, wherein the vehicle-mounted display apparatus is a screen projection display apparatus.

8. The method according to any one of claims 1 to 7, wherein the vehicle-mounted controller and the target device are independent of each other.

9. A display control method, wherein the method comprises:
receiving, by a target device, display data from a vehicle-mounted controller, and displaying, based on the display data, content displayed by a vehicle-mounted display apparatus controlled by the vehicle-mounted controller;
generating, by the target device, operation instruction information based on an operation performed by a user on the content displayed on the target device, wherein the operation instruction information indicates the operation performed by the user; and
sending, by the target device, the operation instruction information to the vehicle-mounted controller, wherein the operation instruction information is used by the vehicle-mounted controller to control display of the vehicle-mounted display apparatus.

10. The method according to claim 9, wherein the displayed content is an audio-visual video, the operation performed by the user is an operation for full-screen display, and the method further comprises:
receiving, by the target device, first indication information from the vehicle-mounted controller, wherein the first indication information indicates the target device to enter a remote control mode; and
entering, by the target device, the remote control mode based on the first indication information, to control, in the remote control mode, a playing status of the audio-visual video of the vehicle-mounted display apparatus.

11. The method according to claim 10, wherein the method further comprises:
when obtaining an exit instruction, exiting, by the target device, the remote control mode according to the exit instruction, and sending exit signaling to the vehicle-mounted controller.

12. The method according to claim 9, wherein the displayed content is a call video, and the method further comprises:
receiving, by the target device, second indication information from the vehicle-mounted controller, wherein the second indication information indicates the target device to enter a shortcut button mode; and
entering, by the target device, the shortcut button mode based on the second indication information, to control, in the shortcut button mode, a status of the call video of the vehicle-mounted display apparatus.

13. The method according to any one of claims 9 to 12, wherein the method further comprises:
scanning, by the target device, connection information displayed on the vehicle-mounted display apparatus, and establishing a connection to the vehicle-mounted controller based on the connection information.

14. The method according to any one of claims 9 to 13, wherein the method further comprises:
sending, by the target device, authentication information, wherein the authentication information comprises information about the target device; and
receiving, by the target device, an authorization indication, wherein the authorization indication indicates that the target device is an authorized device, the authorization indication comprises the connection information, and the connection information is used to establish a connection to the vehicle-mounted controller.

15. The method according to any one of claims 9 to 14, wherein the vehicle-mounted display apparatus is a screen projection display apparatus.

16. The method according to any one of claims 9 to 15, wherein the vehicle-mounted controller and the target device are independent of each other.

17. A display control system, wherein the display control system comprises a vehicle-mounted controller, a target device, and a vehicle-mounted display apparatus controlled by the vehicle-mounted controller;
the vehicle-mounted controller is configured to send display data to the target device, wherein the display data indicates the target device to display content displayed by the vehicle-mounted display apparatus;
the target device is configured to: receive the display data, display, based on the display data, the content displayed by the vehicle-mounted display apparatus, generate operation instruction information based on an operation performed by a user on the content displayed on the target device, and send the operation instruction information to the vehicle-mounted controller, wherein the operation instruction information indicates the operation performed by the user; and
the vehicle-mounted controller is further configured to: obtain the operation instruction information, and control display of the vehicle-mounted display apparatus based on the operation instruction information.

18. The system according to claim 17, wherein the displayed content is an audio-visual video, and the operation performed by the user is an operation for full-screen display;
the vehicle-mounted controller is further configured to send first indication information to the target device, wherein the first indication information indicates the target device to enter a remote control mode; and
the target device is further configured to receive the first indication information and enter the remote control mode, to control, in the remote control mode, a playing status of the audio-visual video of the vehicle-mounted display apparatus.

19. The system according to claim 18, wherein
the target device is further configured to: when obtaining an exit instruction, exit the remote control mode according to the exit instruction, and send exit signaling to the vehicle-mounted controller; and
the vehicle-mounted controller is further configured to receive the exit signaling, wherein the exit signaling indicates exiting of the remote control mode.

20. The system according to claim 17, wherein the displayed content is a call video;
the vehicle-mounted controller is further configured to send second indication information to the target device, wherein the second indication information indicates the target device to enter a shortcut button mode; and
the target device is further configured to receive the second indication information, and enter the shortcut button mode, to control, in the shortcut button mode, a status of the call video of the vehicle-mounted display apparatus.

21. The system according to any one of claims 17 to 20, wherein
the vehicle-mounted controller is further configured to control the vehicle-mounted display apparatus to display connection information, wherein the connection information is used by the target device to establish a connection to the vehicle-mounted controller; and
the target device is further configured to scan the connection information displayed on the vehicle-mounted display apparatus, and establish a connection to the vehicle-mounted controller based on the connection information.

22. The system according to any one of claims 17 to 21, wherein
the target device is further configured to send authentication information, wherein the authentication information comprises information about the target device;
the target device is further configured to receive an authorization indication, wherein the authorization indication indicates that the target device is an authorized device, the authorization indication comprises the connection information, and the connection information is used to establish a connection to the vehicle-mounted controller; and
the vehicle-mounted controller is further configured to receive authorization information, and determine, based on the authorization information, that the target device is an authorized device, wherein the authorization information comprises the information about the target device.

23. The system according to any one of claims 17 to 22, wherein the vehicle-mounted display apparatus is a screen projection display apparatus.

24. The system according to any one of claims 17 to 23, wherein the vehicle-mounted controller and the target device are independent of each other.

25. A vehicle-mounted control apparatus, wherein the vehicle-mounted control apparatus comprises:
a sending unit, configured to send display data to a target device, wherein the display data indicates the target device to display content displayed by a vehicle-mounted display apparatus controlled by the vehicle-mounted control apparatus;
a receiving unit, configured to obtain operation instruction information, wherein the operation instruction information indicates an operation performed by a user on the content displayed on the target device; and
a control unit, configured to control display of the vehicle-mounted display apparatus based on the operation instruction information.

26. The apparatus according to claim 25, wherein the displayed content is an audio-visual video, and the operation performed by the user is for full-screen display; and
the sending unit is further configured to send first indication information to the target device, wherein the first indication information indicates the target device to enter a remote control mode, and the target device is configured to control, in the remote control mode, a playing status of the audio-visual video of the vehicle-mounted display apparatus.

27. The apparatus according to claim 26, wherein
the receiving unit is further configured to receive exit signaling, wherein the exit signaling indicates exiting of the remote control mode.

28. The apparatus according to claim 25, wherein the displayed content is a call video; and
the sending unit is further configured to send second indication information to the target device, wherein the second indication information indicates the target device to enter a shortcut button mode, and the target device is configured to control, in the shortcut button mode, a status of the call video of the vehicle-mounted display apparatus.

29. The apparatus according to any one of claims 25 to 28, wherein
the control unit is further configured to control the vehicle-mounted display apparatus to display connection information, wherein the connection information is used by the target device to establish a connection to the vehicle-mounted control apparatus.

30. The apparatus according to any one of claims 25 to 29, wherein
the receiving unit is further configured to receive authorization information, wherein the authorization information comprises information about the target device; and
the control unit is further configured to determine, based on the authorization information, that the target device is an authorized device.

31. The apparatus according to any one of claims 25 to 30, wherein the vehicle-mounted display apparatus is a screen projection display apparatus.

32. The apparatus according to any one of claims 25 to 31, wherein the vehicle-mounted control apparatus and the target device are independent of each other.

33. A display control apparatus, wherein the display control apparatus comprises:
a receiving unit, configured to receive display data from a vehicle-mounted controller, and display, based on the display data, content displayed by a vehicle-mounted display apparatus controlled by the vehicle-mounted controller;
a processing unit, configured to generate operation instruction information based on an operation performed by a user on the content displayed on the display control apparatus, wherein the operation instruction information indicates the operation performed by the user; and
a sending unit, configured to send the operation instruction information to the vehicle-mounted controller, wherein the operation instruction information is used by the vehicle-mounted controller to control display of the vehicle-mounted display apparatus.

34. The apparatus according to claim 33, wherein the displayed content is an audio-visual video, and the operation performed by the user is for full-screen display; and
the receiving unit is further configured to receive first indication information from the vehicle-mounted controller, wherein the first indication information indicates the display control apparatus to enter a remote control mode; and
the processing unit is further configured to enter the remote control mode based on the first indication information, to control, in the remote control mode, a playing status of the audio-visual video of the vehicle-mounted display apparatus.

35. The apparatus according to claim 34, wherein the method further comprises:
the processing unit is further configured to obtain an exit instruction, and exit the remote control mode according to the exit instruction; and
the sending unit is further configured to send exit signaling to the vehicle-mounted controller.

36. The apparatus according to claim 33, wherein the displayed content is a call video;
the receiving unit is further configured to receive second indication information from the vehicle-mounted controller, wherein the second indication information indicates the display control apparatus to enter a shortcut button mode; and
the processing unit is further configured to enter the shortcut button mode based on the second indication information, to control, in the shortcut button mode, a status of the call video of the vehicle-mounted display apparatus.

37. The apparatus according to any one of claims 33 to 36, wherein
the processing unit is further configured to control scanning of connection information displayed on the vehicle-mounted display apparatus, and establish a connection to the vehicle-mounted controller based on the connection information.

38. The apparatus according to any one of claims 33 to 37, wherein
the sending unit is further configured to send authentication information, wherein the authentication information comprises information about the display control apparatus; and
the receiving unit is further configured to receive an authorization indication, wherein the authorization indication indicates that the display control apparatus is an authorized device, the authorization indication comprises the connection information, and the connection information is used to establish a connection to the vehicle-mounted controller.

39. The apparatus according to any one of claims 33 to 38, wherein the vehicle-mounted display apparatus is a screen projection display apparatus.

40. The apparatus according to any one of claims 33 to 39, wherein the vehicle-mounted controller and the display control apparatus are independent of each other.

41. A vehicle-mounted control apparatus, wherein the apparatus comprises a processor and a memory, the memory stores instructions, and when the instructions are run on the processor, the vehicle-mounted control apparatus is enabled to perform the display control method according to any one of claims 1 to 8.

42. A display control apparatus, wherein the apparatus comprises a processor and a memory, the memory stores instructions, and when the instructions are run on the processor, a vehicle-mounted control apparatus is enabled to perform the display control method according to any one of claims 9 to 16.

43. A display control system, wherein the system comprises a vehicle-mounted controller and a vehicle-mounted display apparatus, the vehicle-mounted controller is configured to control display of the vehicle-mounted display apparatus, and the vehicle-mounted controller comprises the vehicle-mounted control apparatus according to any one of claims 25 to 32 or claim 41.

44. A vehicle, wherein the vehicle comprises the display control system according to claim 43.

45. A computer-readable storage medium, wherein the computer-readable storage medium stores a computer program or instructions, and when the computer program or the instructions are run, the display control method according to any one of claims 1 to 8 is implemented.

46. A computer-readable storage medium, wherein the computer-readable storage medium stores a computer program or instructions, and when the computer program or the instructions are run, the display control method according to any one of claims 9 to 16 is implemented.
